# EUROPEAN PATENT APPLICATION

(11) **EP 4 641 356 A1**
(43) Date of publication of application: **29.10.2025**
(21) Application number: 25172690.7
(22) Date of filing: 25.04.2025
(51) Int. Cl.: G06F 3/01, G06T 19/00

(54) **GENERATIVE MODEL-DRIVEN SAMPLING FOR ADAPTIVE SPARSE MULTIMODAL SENSING OF USER ENVIRONMENT AND INTENT**

(30) Priority: 26.04.2024 US 202463639176 P; 24.04.2025 US 202519188056
(71) Applicant: Meta Platforms Technologies, LLC, Menlo Park, CA 94025 (US)
(72) Inventor: ZURAUSKAS, Mantas, Menlo Park, 94025 (US)
(74) Representative: Murgitroyd & Company

(57) **Abstract**

The disclosed computer-implemented method may include (1) predicting a user state, wherein the user state is measurable via a plurality of different sensor sampling modes, (2) determining a level of uncertainty associated with the predicted user state, and (3) selecting, from the plurality of different sensor sampling modes, a sampling mode to measure the user state. Selecting the sampling mode may include selecting a first sampling mode in response to determining that the level of uncertainty is above a threshold or selecting a second sampling mode in response to determining that the level of uncertainty is below the threshold. Various other methods, systems, and computer-readable media are also disclosed.

## Description

### TECHNICAL FIELD

The present disclosure is generally directed to a framework for selecting a sensor sampling mode based on a level of certainty determined for a predicated user state.

### BACKGROUND

Augmented Reality (AR) systems, Virtual Reality (VR) systems, and Mixed Reality (MR) systems, collectively referred to as Extended Reality (XR) systems, are a budding segment of today's personal computing systems. XR systems, especially wearable XR systems such as head-mounted XR systems, may be poised to usher in an entirely new era of personal computing by providing users with persistent "always-on" assistance, which may be integrated seamlessly into the users' day-to-day lives without being disruptive. In contrast to more traditional personal computing devices, such as laptops or smartphones, XR devices may be capable of displaying outputs to users in a more accessible, lower-friction manner. For example, some head-mounted XR devices may include displays that are always in users' fields of view with which the XR devices may present visual outputs to the users.

### SUMMARY

According to a first aspect, there is provided a computer-implemented method, comprising: predicting a user state, wherein the user state is measurable via a plurality of different sensor sampling modes; determining a level of uncertainty associated with the predicted user state; and selecting, from the plurality of different sensor sampling modes, a sampling mode to measure the user state, wherein selecting the sampling mode comprises: selecting a first sampling mode in response to determining that the level of uncertainty is at or above a threshold; or selecting a second sampling mode in response to determining that the level of uncertainty is below the threshold.

The user state may comprise at least one of: a user behavior; a user biometric; and/or an environmental state relating to a user. The user state may comprise any one, two, or all three noted states.

The user behavior may comprise a user ocular behavior.

The user ocular behavior may comprise movement of at least one of a user pupil position or a user gaze.

The first sampling mode may comprise sampling the user ocular behavior using a first type of sensor. The second sampling mode may comprise sampling the user ocular behavior using a second type of sensor.

The first type of sensor may be different to the second type of sensor. At least one of the first type of sensor or the second type of sensor may comprise at least one of: an ultrasound detector; a camera; a self-mixing interferometry sensor; and/or a scanning-based eye-tracking sensor. The first type of sensor and/or the second type of sensor may comprise any one, two, three, or all four noted sensors.

The camera may comprise at least one of: a waveguide-based camera; an infrared camera; a near-infrared camera; a video-based eye tracking camera; and/or a stereo camera. The camera may comprise any one, two, three, four, or all five noted camera types.

The first sampling mode may comprise capturing image data at a high-frame rate that is high relative to a low-frame rate. The second sampling mode may comprise capturing image data at the low-frame rate.

The first sampling mode may be associated with a power consumption requirement that is high relative to a power consumption requirement associated with the second sampling mode.

The first sampling mode may comprise the use of at least one always-on sensor. The second sampling mode may comprise the use of at least one on-demand sensor.

At least one of the predicting the user state and the determining the level of uncertainty may comprise using a model that is pretrained based on past user behaviors and sensor measurements.

Predicting the user state may comprise determining a physical location of the user.

Predicting the user state may further comprise: determining that information related to the physical location is not currently stored in a reference database for the user; and obtaining additional information about the physical location from at least one external database.

Determining the physical location of the user may comprise determining the physical location of the user using geolocation.

The predicting, the determining, and the selecting steps may each be performed by at least one computation location of plurality of locations. The plurality of computation locations may comprise: a headset; a user computing device; and/or a cloud-based network. The predicting, the determining, and the selecting steps may each be performed at any one, two, or all three noted locations.

The computer-implemented method may further comprise selecting, from the plurality of computation locations, a primary computation location for performing each of the predicting, the determining, and the selecting steps.

According to a second aspect, there is provided a system, comprising: a mode-selection subsystem configured to select sampling modes to measure user states, wherein the user states are each measurable via a plurality of different sensor sampling modes; a headset comprising a plurality of sensors; at least one physical processor; and physical memory comprising computer-executable instructions that, when executed by the physical processor, cause the physical processor to carry out the method of the first aspect.

According to a third aspect, there is provided a computer-readable medium comprising one or more computer-executable instructions that, when executed by at least one processor of a computing device, cause the computing device to carry out the method of the first aspect. The medium may be non-transitory.

According to a fourth aspect, there is provided a computer program product comprising instructions which, when executed by at least one processor of a computing device, cause the computing device to carry out the method of the first aspect.

### BRIEF DESCRIPTION OF THE DRAWINGS

The accompanying drawings illustrate a number of examples and are a part of the specification. Together with the following description, these drawings demonstrate and explain various principles of the present disclosure.
FIG. 1 is a block diagram of an example system for selectively driving sensor sampling.
FIG. 2 is a diagram of an example data flow associated with an exemplary mode-selection subsystem for selectively driving sensor sampling.
FIG. 3 is a block diagram of an example system for selectively driving sensor sampling.
FIG. 4 is a block diagram of an example system for selectively driving sensor sampling.
FIG. 5 is a flow diagram of an example method for selectively driving sensor sampling.
FIG. 6 a flow diagram of an exemplary method artificial-reality system.
FIG. 7 is an illustration of an example artificial-reality system with a handheld device.
FIG. 8A is an illustration of example user interactions within an artificial-reality system.
FIG. 8B is an illustration of example user interactions within an artificial-reality system.
FIG. 9A is an illustration of example user interactions within an artificial-reality system.
FIG. 9B is an illustration of example user interactions within an artificial-reality system.
FIG. 10 is an illustration of an example wrist-wearable device of an artificial-reality system.
FIG. 11 is an illustration of an example wearable artificial-reality system.
FIG. 12 is an illustration of an example augmented-reality system.
FIG. 13A is an illustration of an example virtual-reality system.
FIG. 13B is an illustration of another perspective of the virtual-reality systems shown in FIG. 13A.
FIG. 14 is a block diagram showing system components of example artificial- and virtual-reality systems.
FIG. 15A is an illustration of an example intermediary processing device.
FIG. 15B is a perspective view of the intermediary processing device shown in FIG. 15A.
FIG. 16 is a block diagram showing example components of the intermediary processing device illustrated in FIG. 15A and 15B.
FIG. 17A is front view of an example haptic feedback device.
FIG. 17B is a back view of the example haptic feedback device shown in FIG. FIG. 17A.
FIG. 18 is a block diagram of example components of a haptic feedback device.
FIG. 19 an illustration of an example system that incorporates an eye-tracking subsystem capable of tracking a user's eye(s).
FIG. 20 is a more detailed illustration of various aspects of the eye-tracking subsystem illustrated in FIG. 19.

Throughout the drawings, identical reference characters and descriptions indicate similar, but not necessarily identical, elements. While the examples described herein are susceptible to various modifications and alternative forms, specific examples have been shown in the drawings and will be described in detail herein. However, the examples described herein are not intended to be limited to the particular forms disclosed. Rather, the present disclosure covers all modifications, equivalents, and alternatives falling within the scope of the appended claims.

### DETAILED DESCRIPTION

XR devices, such as AR glasses, often include various components (camera, microphone, artificial intelligence engine, eye/face tracking, geolocation, accelerometers, etc.) that are useful for an always-on, contextually aware virtual assistant. Ideally, the information from the sensors and other components could be used to build and update a model of a user's environment and intent during extended periods of device use throughout the day. Unfortunately, the utility and availability of sensor information is typically limited by available battery life. In headsets, such as AR glasses, battery space is usually limited while the power required to operate different sensors utilized to provide always-on assistance is significant.

The present disclosure is generally directed to a framework for selecting a sensor sampling mode based on a level of certainty determined for a predicated user state (e.g., predicted using a generative model). In some examples, the framework may enable persistent (e.g., always-on) adaptive sensing of user states, including user biosignals and/or user-relevant environmental signals, via sensor data collected by sensors coupled to a user device (e.g., a wearable device such as a pair of artificial reality glasses and/or a smart watch, a mobile device such as a smart phone, etc.). In some examples, the persistent adaptive sensing may be used to learn about user goals, routines, environments, and/or social interactions. The adaptive sensing may be used to build and/or update a model of user environment and/or user intent (e.g., throughout the day). In one example, the persistent sensing may be used to yield an always on contextually aware virtual assistant that operates with minimal power requirements in a variety of environments.

The persistent adaptive sensing may be adaptive in a various of ways. For example, in some examples, a generative model may be used to predict a user state (e.g., a user behavior such as a user eye-tracking behavior, a user biometric, etc.) and/or a user-relevant environmental state. Then, an amount of uncertainty may be determined for the predicted user state. The amount of uncertainty may dictate a sampling mode used to measure the user state (e.g., at a current or future moment in time corresponding to the predicted user state). If the uncertainty is high, a sampling mode that measures the user state more accurately (e.g., but has a higher power consumption requirement) may be used. By contrast, if the uncertainty is low, a sampling mode that measures the user state less accurately (e.g., but has a lower power consumption requirement) may be used.

Features from any of the examples and/or embodiments described herein may be used in combination with one another in accordance with the general principles described herein. These and other examples, features, and advantages will be more fully understood upon reading the following detailed description in conjunction with the accompanying drawings and claims.

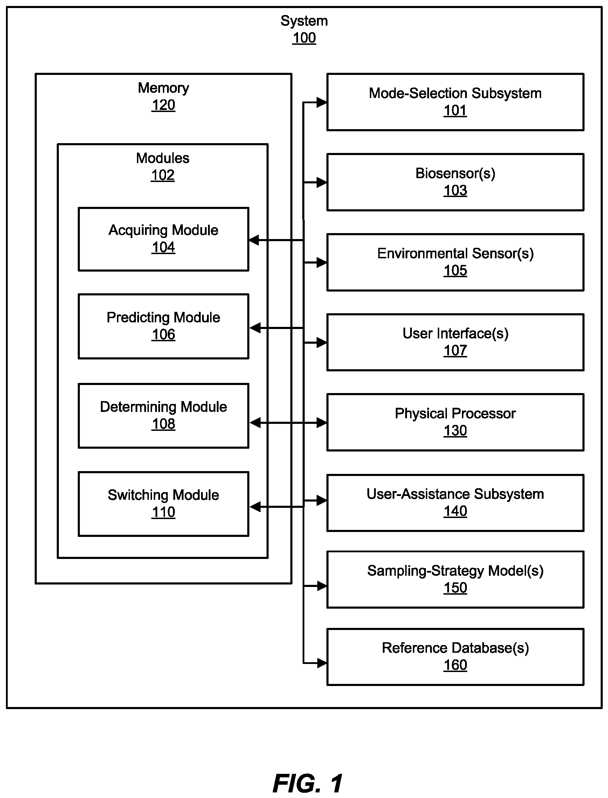

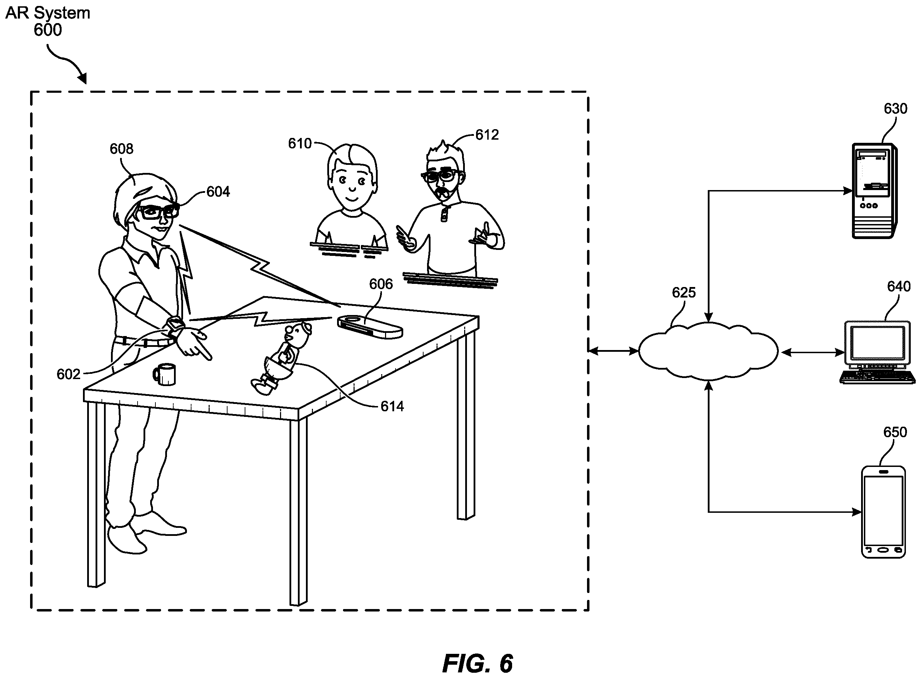

The following will provide, with reference to FIGS. 1-5, detailed descriptions of exemplary systems, subsystems, and methods for predicting user states and selecting corresponding headset sampling modes via one or more headset sensors. The discussions corresponding to FIGS. 6-20 will provide detailed descriptions of various extended-reality systems and components that may implement examples of the present disclosure.

FIG. 1 is a block diagram of an example system 100 for predicting a user state and selecting headset sampling modes. As illustrated in this figure, system 100 may include one or more modules 102 for performing one or more tasks. System 100 may be an XR system, such as a system including AR glasses worn by a user. As will be explained in greater detail below, modules 102 may include an acquiring module 104 that acquires sensor data, such as biosignals (e.g., eye-tracking signals indicative of gaze dynamics) generated by a user of system 100 and/or environmental signals generated by an environment of a user.

Example system 100 may also include a predicting module 106 that uses the signals acquired by acquiring module 104 to predict a user state, such as a state of the user and/or environment in which the user is located. For example, predicting module 106 may use biosignals and/or environmental signals acquired by acquiring module 104 to anticipate whether a user's intentions and/or environmental surroundings allow for a low-power sampling mode or whether a high-power sampling mode is required to collect sufficient sensor data.

Additionally, Example system 100 may include a determining module 108 that determines a level of uncertainty associated with the predicted user state. In some examples, the determining module 108 may determine that the level of uncertainty is at or above the predefined threshold, resulting in selection of a first, high-power sampling mode. In some examples, the determining module 108 may determine that the level of uncertainty is below a predefined threshold, resulting in selection of a second, low-power sampling mode. Example system 100 may further include a switching module 110 that switches between sampling modes of a plurality of available sampling modes (e.g., the first and second sampling modes) as needed.

In some examples, the system 100 may provide always-on adaptive sensing of user intent and environment that monitors and provides assistive tools to the user based on the user intent and environment. The system may provide, for example, sampling via at least the low-power sampling mode may be provided at all times during use by a user. In some examples, the system 100 may be enabled by machine learning (ML)-driven sparse sampling strategy. In one example, the system 100 may learn about one or more of a user's goals, routines, environments, and social interactions. The system 100 may then dynamically generate a sampling strategy that adjusts sampling frequency and/or sampling type using multimodal sensing streams to detect and keep track of new and/or changing environments and user experiences. As used herein, the term "user state" may refer to or include one or more measurable features of a user (e.g., biosignals) and/or one or more measurable features of the user's environment (e.g., environmental signals).

In some examples, a mode-selection subsystem 101 may select one of a plurality of different sampling modes based on the user's current and/or future predicted intentions and/or environment. The different sampling modes may each utilize one or more of a plurality of biosensors 103 and/or environmental sensors 105 to collect data in accordance with the selected sampling mode to acquire information about a user's state, include sensor data collected from the user and/or their environment. In some examples, biosensor(s) 103 may represent or include one or more physiological sensors capable of generating real-time biosignals indicative of one or more physiological characteristics of users and/or for making real-time measurements of biopotential signals generated by users. A physiological sensor may represent or include any sensor that detects or measures a physiological characteristic or aspect of a user (e.g., gaze, heart rate, respiration, perspiration, skin temperature, body position, and so on). In some examples, biosensor(s) 103 may collect, receive, and/or identify biosensor data that indicates, either directly or indirectly, physiological information that may be associated with and/or help identify users' intentions. In some examples, biosensor(s) 103 may represent or include one or more human-facing sensors capable of measuring physiological characteristics of users. Examples of biosensor(s) 103 include, without limitation, eye-tracking sensors, hand-tracking sensors, body-tracking sensors, heart-rate sensors, cardiac sensors, neuromuscular sensors, electrooculography (EOG) sensors, electromyography (EMG) sensors, electroencephalography (EEG) sensors, electrocardiography (ECG) sensors, microphones, visible light cameras, infrared cameras, ambient light sensors (ALSs), inertial measurement units (IMUs), heat flux sensors, temperature sensors configured to measure skin temperature, humidity sensors, bio-chemical sensors, touch sensors, proximity sensors, biometric sensors, saturated-oxygen sensors, biopotential sensors, bioimpedance sensors, pedometer sensors, optical sensors, sweat sensors, variations or combinations of one or more of the same, or any other type or form of biosignal-sensing device or system.

In some examples, environmental sensor(s) 105 may represent or include one or more sensing devices capable of generating real-time signals indicative of one or more characteristics of users' environments. In some examples, environmental sensor(s) 105 may collect, receive, and/or identify data that indicates, either directly or indirectly, an entity in the user's environment, such as a thing, a person, or a condition, that a user may wish to interact with and/or remember. Examples of environmental sensor(s) 105 include, without limitation, cameras, microphones, Simultaneous Localization and Mapping (SLAM) sensors, Radio-Frequency Identification (RFID) sensors, variations or combinations of one or more of the same, or any other type or form of environment-sensing or object-sensing device or system.

The different sampling modes may utilize different sampling strategies that require different power loads. For example, a first sampling mode may utilize one or more sensors requiring higher power loads to collect more detailed data related to the user and/or their environment. A second sampling mode, on the other hand, may utilize one or more different sensor types requiring lower power loads to operate. Additionally or alternatively, one or more sensors may collect data less frequently and/or may collect a lower resolution of data (e.g., image) date in the second sampling mode. In one example, fewer overall sensors may be utilized in the second sampling mode in comparison to the first sampling mode. Accordingly, the second sampling mode may allow the system 100 to operate in a power-efficient way while collecting sufficient sampling data to meet the current user needs at a particular point in time. While first and second sampling modes are described in this example, any suitable number of sampling modes may be utilized by the disclosed system 100.

In some examples, the sampling data collected in one or more of the sampling modes may be utilized by a user-assistance subsystem 140 to provide assistance to a user to, for example, support and guide a user in performing one or more tasks. For example, the user-assistance subsystem 140 may provide the user with a virtual assistant that provides various types of support and guidance to the user via, for example, audio and/or visual data presented the user through one or more user interfaces 107. In some examples, the user-assistance subsystem 140 may, when prompted, use contextual information determined based on data received from the one or more biosensors 103 and/or environmental sensors 105 to support and/or guide the user. In some examples, the user-assistance subsystem 140 may provide one or more assistive tools suited to a particular situation based on data obtained from biosensor(s) 103 and/or environmental sensor(s) 105 and in accordance with available reference data and/or user preferences. Such assistive tools may represent or include any tool that reduces the mental load, effort, or exertion required by a user. Assistive tools may, for example, include or represent a notepad, a list, a shopping list, a grocery list, a to-do list, a list of reminders, a journal, a diary, a catalog, an inventory, a calendar, a contact manager, a wallet, a sketchpad, a photo tool, a video tool, an audio tool, a map, an e-commerce tool, a user-input tool that facilitates the collection of information from the user, an information management tool that facilitates the search for and/or the retrieval of information, variations or combinations of one or more of the same, or any other type or form of tool that may assist a user's tasks and/or goals.

In some examples, the system 100 may utilize a multi-mode sampling approach to provide assistive support to a user while minimizing overall power requirements. For example, a dual-mode sampling approach may be used in which readouts of user and environmental data is captured at regular intervals. In this approach, data from more power-efficient sensors, such as a microphone and/or an accelerometer of a headset, may be used to sample data in a low-power mode. The power-efficient sensors may periodically detect events (e.g., events flagged as important based on environmental context, user intent cues, predefined user-preferences, etc.) requiring a higher level of sensor input from sensors requiring a greater amount of power to operate. Upon detecting such an event, switching module 110 may switch to a high-power mode that utilizes one or more different sensors in place of and/or in addition to sensors used in the low-power mode. In some examples, a user environment may be determined to require a higher level of sensor input. For example, a location of a user may be determined to be new (e.g., a location that is unmapped and/or that is not yet associated with a set of predefined user preferences) such that various the determining module 108 determines that a level of uncertainty associated with the location exceeds a predefined threshold. In this case, switching module 110 may switch to a high-power mode in order to obtain a higher level of sensor input regarding the new location. Eventually, sensor data gathered by the high-power sensors may be used to build a sufficient set of data regarding the new location to reduce the level of uncertainty below the predefined threshold, at which point the switching module 110 may switch back to the low-power mode to preserve battery life of a user headset device.

In some examples, the disclosed systems may predict user intent based on a variety of cognitive states that a user may be in depending on predicted user states. As used herein, the term "cognitive state" may refer to or include one or more cognitive tasks, functions, and/or processes involved in users acquiring knowledge and/or awareness through thinking, experiencing, and/or sensing. Additionally or alternatively, the term "cognitive state" may refer to or include one or more tasks, functions, and/or processes of cognition related to perceiving, concentrating, conceiving, remembering, reasoning, judging, comprehending, problem solving, and/or decision making. In some examples, the term "cognitive state" may refer to or include internal mental states that may not be externally observable.

As further illustrated in FIG. 1, example system 100 may also include one or more sampling-strategy models, such as sampling-strategy model(s) 150, trained and/or otherwise configured to build and/or update a sampling strategy utilized by the mode-selection subsystem 101 to optimize performance of a user device, such as an XR headset (e.g., AR glasses), while balancing limited battery resources by minimizing power usage by the user device. In at least one example, the sampling-strategy model(s) 150 may include or represent a generative machine learning and/or artificial intelligence model. In some examples, the disclosed systems may train the sampling-strategy model(s) 150 to develop and/or update a sampling strategy that maximizes the utility of information from all available sensors (e.g., biosensor(s) 103 and environmental sensor(s) 105) while minimizing sampling rates and amounts of data required to be captured by the sensors so as to reduce power loads required to operate the sensors and corresponding computations of the sensor data.

The sampling-strategy model(s) 150 may represent or include any artificial intelligence and/or machine-learning model, algorithm, heuristic, data, or combination thereof, that may anticipate, recognize, detect, estimate, predict, label, infer, and/or react to the temporal onset of a user's cognitive-state transitions based on and/or using biosignals acquired from one or more biosensors, such as biosensors 103. Examples of sampling-strategy model(s) 150 include, without limitation, decision trees (e.g., boosting decision trees), neural networks (e.g., a deep convolutional neural network), deep-learning models, support vector machines, linear classifiers, non-linear classifiers, perceptrons, naive Bayes classifiers, variational autoencoders (VAEs), autoregressive models, flow-based models, restricted Boltzmann machines (RBMs), any other machine-learning or classification techniques or algorithms, or any combination thereof.

As additionally illustrated in FIG. 1, example system 100 may also include one or more reference databases, such as reference database 160. Reference database 160 may store data that may be utilized by the mode-selection subsystem 101 to predict a utility of using one or more of biosensor(s) 103 and/or environmental sensor(s) 105 based on available data (e.g., data obtained from low-power sensors) and to determine required sampling rates for the different sensors. In some examples, the reference database 160 may be utilized to select a mode of a plurality of modes and/or to develop one or more modes suited to a particular user state in accordance with a sampling strategy.

As further illustrated in FIG. 1, example system 100 may also include one or more memory devices, such as memory 120. Memory 120 may include or represent any type or form of volatile or non-volatile storage device or medium capable of storing data and/or computer-readable instructions. In one example, memory 120 may store, load, and/or maintain one or more of modules 102. Examples of memory 120 include, without limitation, Random Access Memory (RAM), Read Only Memory (ROM), flash memory, Hard Disk Drives (HDDs), Solid-State Drives (SSDs), optical disk drives, caches, variations or combinations of one or more of the same, or any other suitable storage memory.

As further illustrated in FIG. 1, example system 100 may also include one or more physical processors, such as physical processor 130. Physical processor 130 may include or represent any type or form of hardware-implemented processing unit capable of interpreting and/or executing computer-readable instructions. In one example, physical processor 130 may access and/or modify one or more of modules 102 stored in memory 120. Additionally or alternatively, physical processor 130 may execute one or more of modules 102 to facilitate prediction or signaling of cognitive-state transitions. Examples of physical processor 130 include, without limitation, microprocessors, microcontrollers, central processing units (CPUs), Field-Programmable Gate Arrays (FPGAs) that implement softcore processors, Application-Specific Integrated Circuits (ASICs), portions of one or more of the same, variations or combinations of one or more of the same, or any other suitable physical processor.

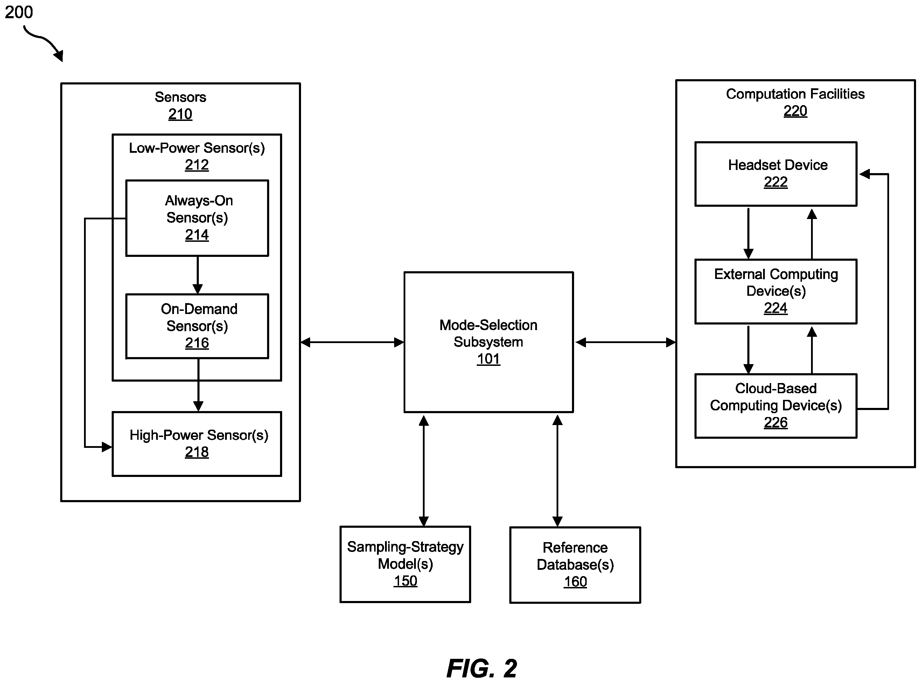

FIG. 2 illustrates an exemplary data flow 200 of the mode-selection subsystem 101 for intelligently selecting and switching between sampling modes affecting the power load of at least a portion of the system 100, such as a headset worn by a user, while providing assistance to the user using adaptive interfaces and interventions in response to sensor data collected by one or more sensors.

In the data flow 200 illustrated in FIG. 2, the mode selection subsystem 101 may send one or more signals to the sensors 210 directing sampling by one or more of the sensors 210 in accordance with a selected sampling mode. The sensors 210 may include at least one low-power sensor 212 and at least one high-power sensor 218. In some examples, the low-power sensor(s) 212 may be used in a low-power sampling mode (e.g., a second sampling mode as described above). The low-power sensor(s) 212 may include one or more always-on sensors 214 and/or on-demand sensors 216. The always-on sensors(s) 214 may have adaptive sampling rates that may be reduced in frequency to reduce power use (e.g., in a low-power sampling mode) or may be increased in frequency to provide additional data for measuring a user state (e.g., in a higher-power sampling mode to obtain additional biosignal data and/or environmental data). The always-on sensor(s) 212 may include, for example, an audio sensor (e.g., a microphone), a low-power eye-tracking and/or face-tracking sensor (e.g., an ultrasound detector), etc. The on-demand sensor(s) 216 may include, for example, an accelerometer.

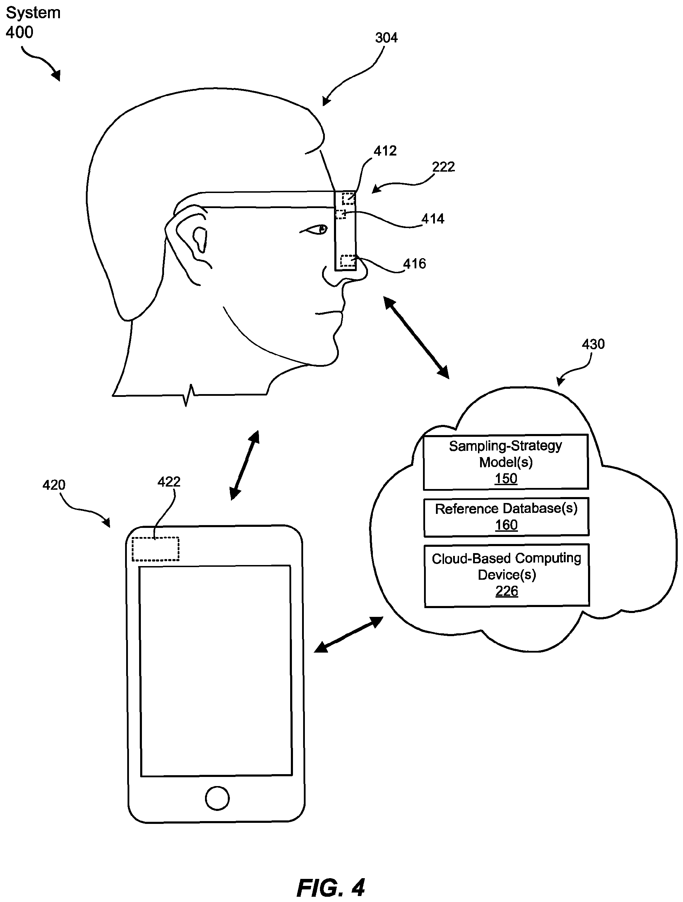

In some examples, at least one low-power sensor 212 (e.g., an accelerometer, a geolocation sensor, such as a global positioning system (GPS) sensor, Wi-Fi antenna, BLUETOOTH antenna, wireless network antenna, etc.) or other sensor may be included on a user device (e.g., a smart phone, a tablet, etc.) that is separate from but in communication with a headset worn by the user (see, e.g., FIG. 4). Because the sensor is located on a device that is separate from the headset, the headset power demands may be reduced while receiving signal data obtained by the separate device.

In some examples, the high-power sensor(s) 218 may be used in a high-power sampling mode (e.g., a first sampling mode as described above). The high-power sensor(s) 218 may include, for example, one or more cameras (e.g., a stereo camera, a waveguide-based camera, an infrared camera, a near-infrared camera, a video-based eye tracking camera, etc.), high-power eye-tracking and/or face-tracking sensor (e.g., a camera-based sensor, a self-mixing interferometry sensor, a scanning-based eye-tracking sensor, etc.). The sensors 210 selected in conjunction with the selected sampling mode may send obtained sensor data back to the mode-selection subsystem 101.

In some examples, computations for evaluating sensor data, predicting user states, determining uncertainty levels, selecting sensor sampling modes, and/or any other computations performed by the system 100 may be carried out by one or more computation facilities 220 located on different devices and/or networks. Distributing the computation load, which may be relatively power-intensive, to various devices may reduce the power load on a user headset, thereby extending battery life of the headset device. In some examples, the mode-selection subsystem 101 may send one or more signals to the computation facilities 220 to direct that computations and/or other resource intensive operations be carried out by various computing devices.

In some examples, the computation facilities 220 may include computing resources located on a user headset device 222. Additionally, the computation facilities 220 may include computing resources located on one or more external computing devices 224 (e.g., a user smart phone, tablet, laptop, etc.) and/or one or more cloud-based computing devices 226 (e.g., cloud-based servers) located on a cloud-based network. In some examples, the headset device 222 may be communicatively coupled (e.g., wirelessly) to the external computing device(s) 224 and/or the cloud-based computing device(s) via one or more networks. In some examples, the mode-selection subsystem 101 may utilize a computing strategy to optimize performance of a user device, such as the headset device 222, while balancing limited battery resources by minimizing power usage by the headset device 222. For example, rather than performing computations related to collected sensor data on the headset device 222 alone, the mode-selection subsystem 101 may offload at least a portion of the computational load to the external computing device(s) 224 and/or the cloud-based computing device(s) 226. Any suitable functions related to data collection (e.g., sensor data collection), processing, analysis, and/or related assistive support may be distributed between the headset device 222, the external computing device(s) 224 and/or the cloud-based computing device(s) 226 to provide a suitable level of performance of the headset device 222 while minimizing power required to operate the headset device 222.

The mode-selection subsystem 101 may also utilize information from reference database(s) 160 to predict the utility and required sampling rates for different sensors to select a suitable sampling mode. In some examples, the reference database(s) 160 may also include thresholds, such as threshold levels of uncertainty, used to select between a plurality of different available sampling modes. In some examples, the mode-selection subsystem 101 may utilize sampling-strategy model(s) 150, such as a generative model, to build and update one or more sampling modes that are aligned with goals to achieve a suitably high level of device performance at a minimal power usage.

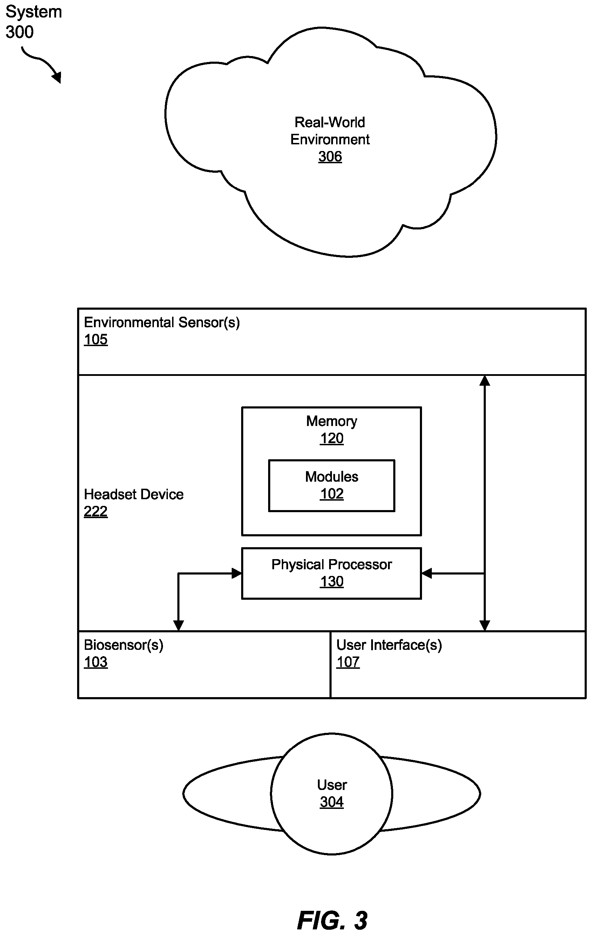

System 100 in FIG. 1 may be implemented in a variety of ways. For example, all or a portion of system 100 may represent portions of an example system 300 in FIG. 3. As shown in FIG. 3, system 300 may include a headset device 222 (e.g., a wearable XR device, such as AR glasses) having (1) one or more user-facing sensors (e.g., biosensor(s) 103) capable of acquiring biosignal data generated by a user 304, (2) one or more environment-facing sensors (e.g., environmental sensor(s) 105) capable of acquiring environmental data about a real-world environment 306 of user 304, and/or (3) a user interface 107 capable of displaying assistive tools to user 304.

As shown in FIG. 3, headset device 222 may be programmed with one or more of modules 102 from FIG. 1 (e.g., acquiring module 104, predicting module 106, and/or signaling module 108) that may, when executed by headset device 222, enable headset device 222 to (1) acquire, via one or more of biosensor(s) 103, one or more biosignals generated by user 304, (2) use the one or more biosignals to anticipate transitions to, from, and/or between cognitive states of user 304, and (3) provide a state-transition signal indicating the transitions to, from, and/or between cognitive states of user 304 to an intelligent-facilitation subsystem of headset device 222.

FIG. 4 shows an example system 400 for predicting a user state and selecting headset sampling modes. As shown in FIG. 4, system 400 may include a headset device 222, such as AR glasses, worn by a user 304. The headset device 222 may include various low-power and high-power sensors, including biosensors and/or environmental sensors used to determine a user state of the user 304. For example, the headset device 222 shown in FIG. 4 may include a camera 412 to capture images of an environment of the user 304, a biosensor 414, such as a user eye tracking and/or face tracking sensor, and a microphone 416.

As shown in FIG. 4, the headset device 222 may be communicatively coupled to an external computing device, such as a user smart phone 420, and a cloud-based network 430. The user smart phone 420 may include a computing facility 422 to handle computations for headset device 222. Additionally, In some examples, the user smart phone 420 may include one or more sensors that may be utilized to determine a user state. For example, the user smart phone 420 may include a geolocation sensor (e.g., a GPS sensor) to identify a location of the user 304 and/or their environment. The cloud-based network 430 may include one or more sampling-strategy model(s) 150, reference database(s) 160, and/or cloud-based computing device(s) 226, as described above.

By way of example, In one example, a user 304 may obtain a headset device 222, such as a new pair of AR glasses. Initially the phone-based geolocation data from a user device, such as user smart phone 420, may be merged with Al and/or machine-learning data derived from photos and/or soundbites of the user's environment. Initially, more sensor samples may be captured in order to train the model and/or to build a repository of data to be utilized and analyzed to build spatial map that includes information about spaces, devices, and resources available to the new headset device 222 in indoor and/or outdoor environments. This sample data may be cross-referenced with user preferences and/or user profiles and/or with publicly available information about geographical and physical locations in order to build a more complete contextual understanding of the user 304 and their commonly-used environment(s). More information may be added as the user 304 explores new locations. New interactions with other people can be detected through, for example, a microphone 416 input. In some examples, transcripts of the interactions can optionally be stored and user social connection identities may be built and mapped over time. Contextual information about social connections can be supplemented from publicly available sources or explicitly shared private profiles.

Once initial mapping of people and places is completed, the initial data-intensive video capture and/or other sensor sampling requirements can be reduced to low-power sensor sampling strategy, which may include, for example, random geo-located checks to identify any evolution or changes of the user environment. In one example, after an environmental location, such as a home gym, is already mapped, a user-assistance subsystem 140 may use this stored information to generate and guide a user through a workout plan without constant need of checking what space and equipment may be available within the geolocated environment. After a workout, the user may use a camera of the headset device 222 to capture a photo of their fridge and pantry. The user-assistance subsystem 140 may then use previously stored knowledge about the user's cooking skills and preferences as well as available cooking facilities to suggest a balanced meal. In some examples, the cooking suggestions may be further aligned with a time of day in conjunction with the user's goals and preferences.

In an additional example, when a user 304 visits a new city, the user-assistance subsystem 140 could use publicly available information stored in one or more reference databases 160. The database(s) 160 may provide information about the city's landmarks, restaurants, and other points of interest to provide recommendations and suggestions to the user 304 for things to do and see. The system could also use the user's past behavior and preferences to suggest activities or places in the city that the user 304 might enjoy.

In another example, a user 304 may be in a remote area with limited connectivity. In this case, the system may use knowledge gained from previous environments and tasks to provide contextual understanding and support to the user 304 via the headset device 222. For instance, the user 304 may be on a hike and may need help finding their way back to civilization. The system could use the user's location and the knowledge it has gained from previous hikes to suggest to the user 304, via the headset device 222, an optimal route back.

In a further example, the system could also use unsupervised machine-learning techniques to learn about new environments and tasks without the need for labeled data. This would allow the system to continue learning and improving over time, even when the user 304 may not be actively interacting with the headset device 222.

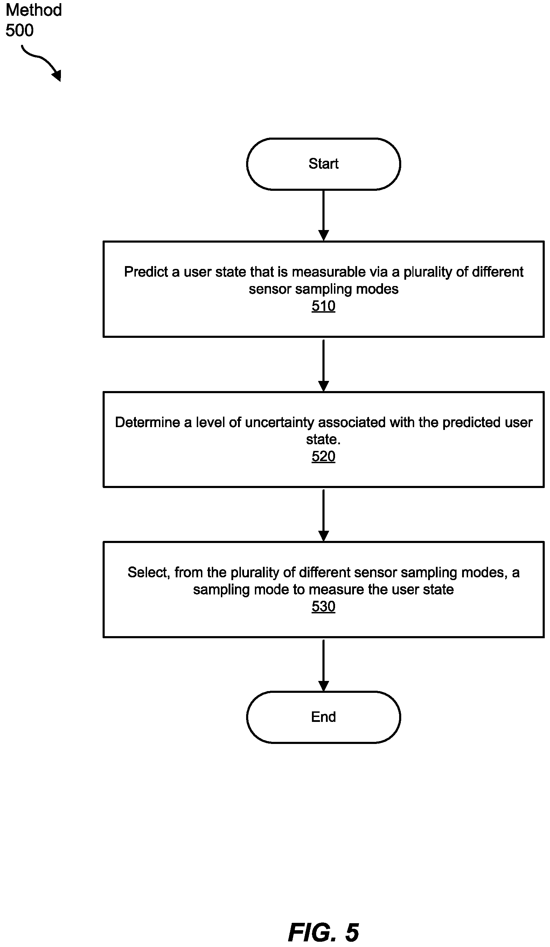

FIG. 5 is a flow diagram of an exemplary computer-implemented method 500 for selectively driving sensor sampling. The steps shown in FIG. 5 may be performed by any suitable computer-executable code and/or computing system, including the system(s) illustrated in FIGS. 1-4 and 6-20. In one example, each of the steps shown in FIG. 5 may represent an algorithm whose structure includes and/or is represented by multiple sub-steps, examples of which will be provided in greater detail below.

As illustrated in FIG. 5, at step 510, one or more of the systems described herein may predict a user state, wherein the user state is measurable via a plurality of different sensor sampling modes. For example, predicting module 106 may predicting a user state of the user 304. In one example, acquiring module 104 may, as part of headset device 222 in FIGS. 2-4, use one or more of biosensors 103 and/or environmental sensors 105 to measure data of the state of user 304 in accordance with one of a plurality of sampling modes.

At step 520, one or more of the systems described herein may determine a level of uncertainty associated with the predicted user state. For example, determining module 108 may determine a level of uncertainty associated with the predicted user state.

At step 530, one or more of the systems described herein may select, from the plurality of different sensor sampling modes, a sampling mode to measure the user state. For example, mode-selection subsystem 101 may select, from the plurality of different sensor sampling modes, a sampling mode to measure the user state. As described herein, the various sampling modes may each utilize a selected combination of sensors and sampling rates to carry out a sampling strategy that balances power use and device performance in accordance with current objectives and sensory data. In some examples, the selecting the sampling mode may include either selecting a first sampling mode in response to determining that the level of uncertainty is at or above a threshold (e.g., a predefined threshold) or selecting a second sampling mode in response to determining that the level of uncertainty is below the threshold.

The disclosed systems and methods enable selection and use of various sensor sampling modes optimize performance of a user device (e.g., an XR headset) while balancing limited battery resources by minimizing power usage. In some examples, the framework may enable persistent (e.g., always-on) adaptive sensing of user states, including user biosignals and/or user-relevant environmental signals via sensor data collected by sensors coupled to the user device. In some examples, the persistent adaptive sensing may be used to learn about user goals, routines, environments, and/or social interactions. The adaptive sensing may be used to build and/or update a generative machine-learning model of user environment and/or user intent (e.g., throughout the day). In one example, the persistent sensing may be used to yield an always on contextually aware virtual assistant that operates with minimal power requirements in a variety of environments.

Embodiments of the present disclosure may include or be implemented in conjunction with various types of Artificial-Reality (AR) systems. AR may be any superimposed functionality and/or sensory-detectable content presented by an artificial-reality system within a user's physical surroundings. In other words, AR is a form of reality that has been adjusted in some manner before presentation to a user. AR can include and/or represent virtual reality (VR), augmented reality, mixed AR (MAR), or some combination and/or variation of these types of realities. Similarly, AR environments may include VR environments (including non-immersive, semi-immersive, and fully immersive VR environments), augmented-reality environments (including marker-based augmented-reality environments, markerless augmented-reality environments, location-based augmented-reality environments, and projection-based augmented-reality environments), hybrid-reality environments, and/or any other type or form of mixed- or alternative-reality environments.

AR content may include completely computer-generated content or computer-generated content combined with captured (e.g., real-world) content. Such AR content may include video, audio, haptic feedback, or some combination thereof, any of which may be presented in a single channel or in multiple channels (such as stereo video that produces a three-dimensional (3D) effect to the viewer). Additionally, In some examples, AR may also be associated with applications, products, accessories, services, or some combination thereof, that are used to, for example, create content in an artificial reality and/or are otherwise used in (e.g., to perform activities in) an artificial reality.

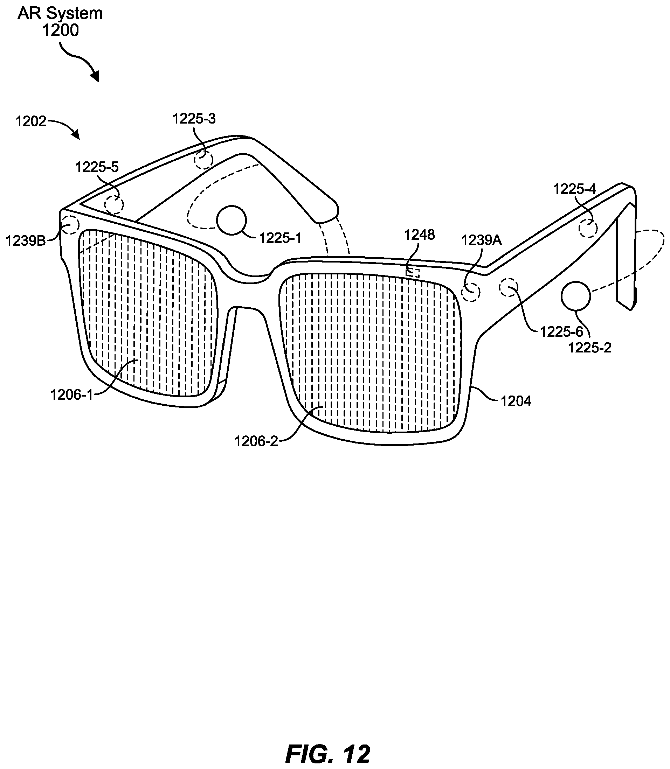

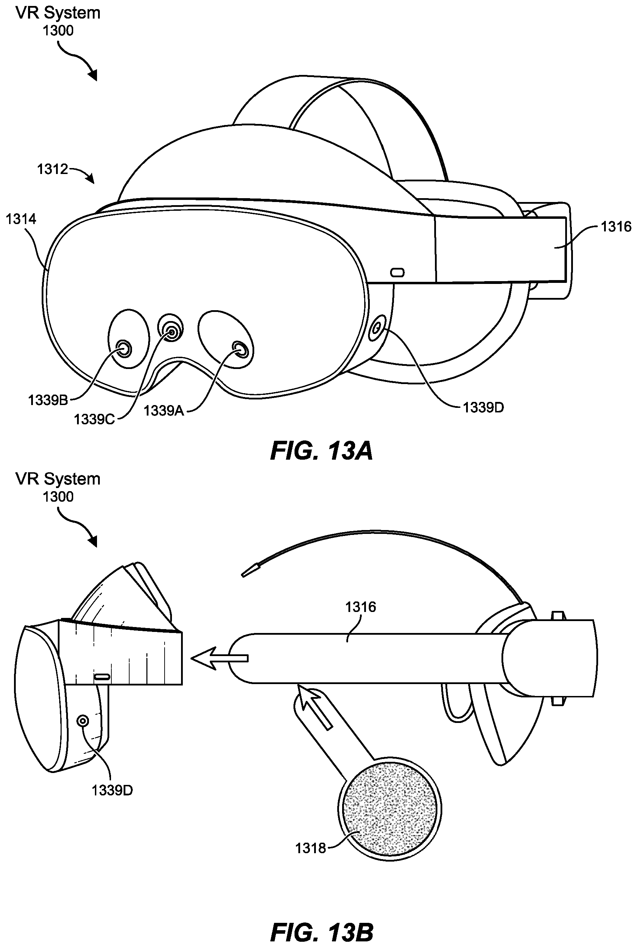

AR systems may be implemented in a variety of different form factors and configurations. Some AR systems may be designed to work without near-eye displays (NEDs). Other AR systems may include a NED that also provides visibility into the real world (such as, e.g., augmented-reality system 1200 in FIG. 12) or that visually immerses a user in an artificial reality (such as, e.g., virtual-reality system 1300 in FIGS. 13A and 13B). While some AR devices may be self-contained systems, other AR devices may communicate and/or coordinate with external devices to provide an AR experience to a user. Examples of such external devices include handheld controllers, mobile devices, desktop computers, devices worn by a user, devices worn by one or more other users, and/or any other suitable external system.

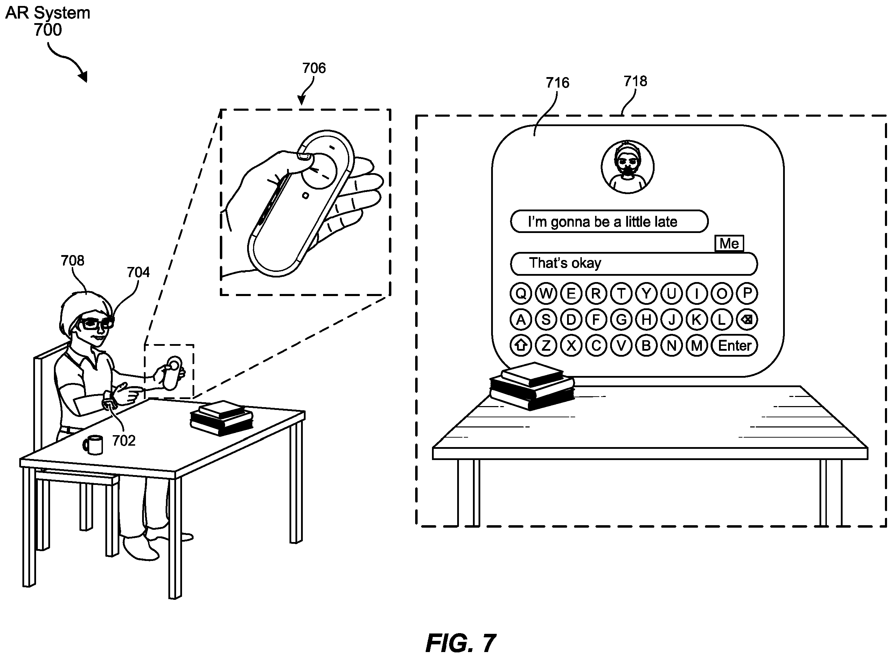

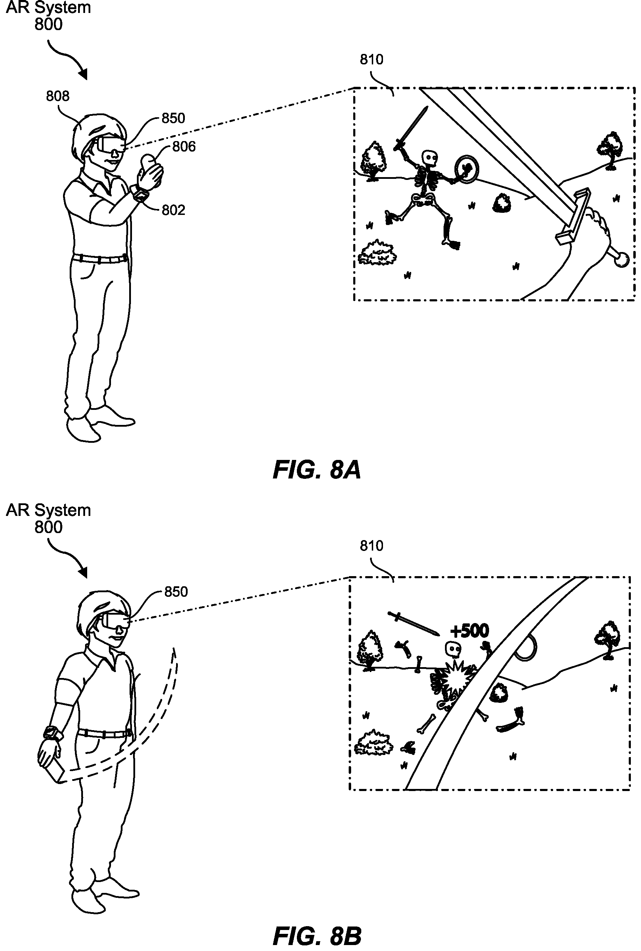

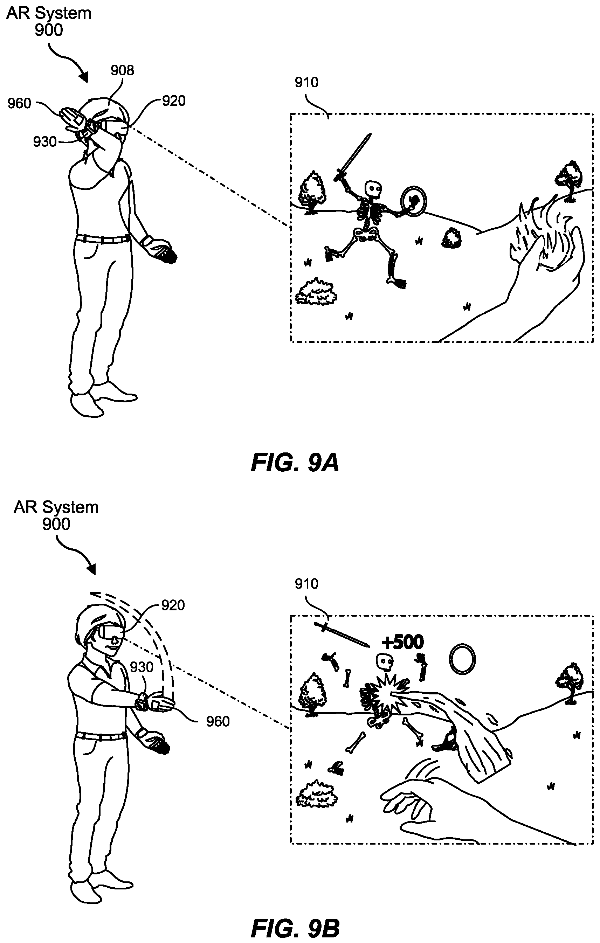

FIGS. 6-9B illustrate example artificial-reality (AR) systems. FIG. 6 shows a first AR system 600 and first example user interactions using a wrist-wearable device 602, a head-wearable device (e.g., AR glasses 1200), and/or a handheld intermediary processing device (HIPD) 606. FIG. 7 shows a second AR system 700 and second example user interactions using a wrist-wearable device 702, AR glasses 704, and/or an HIPD 706. FIGS. 8A and 8B show a third AR system 800 and third example user 808 interactions using a wrist-wearable device 802, a head-wearable device (e.g., VR headset 850), and/or an HIPD 806. FIGS. 9A and 9B show a fourth AR system 900 and fourth example user 908 interactions using a wrist-wearable device 930, VR headset 920, and/or a haptic device 960 (e.g., wearable gloves).

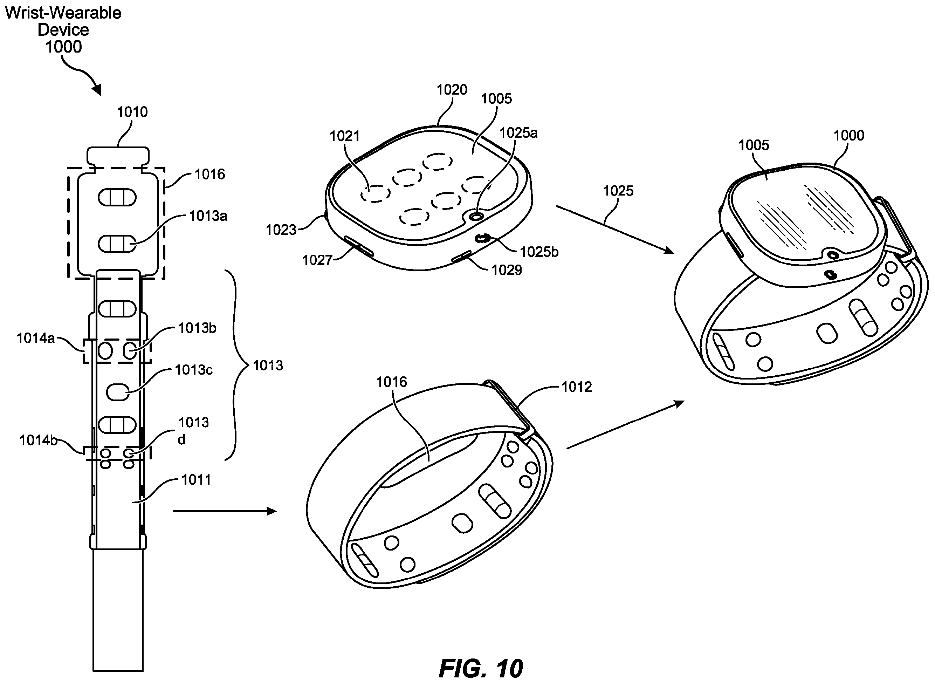

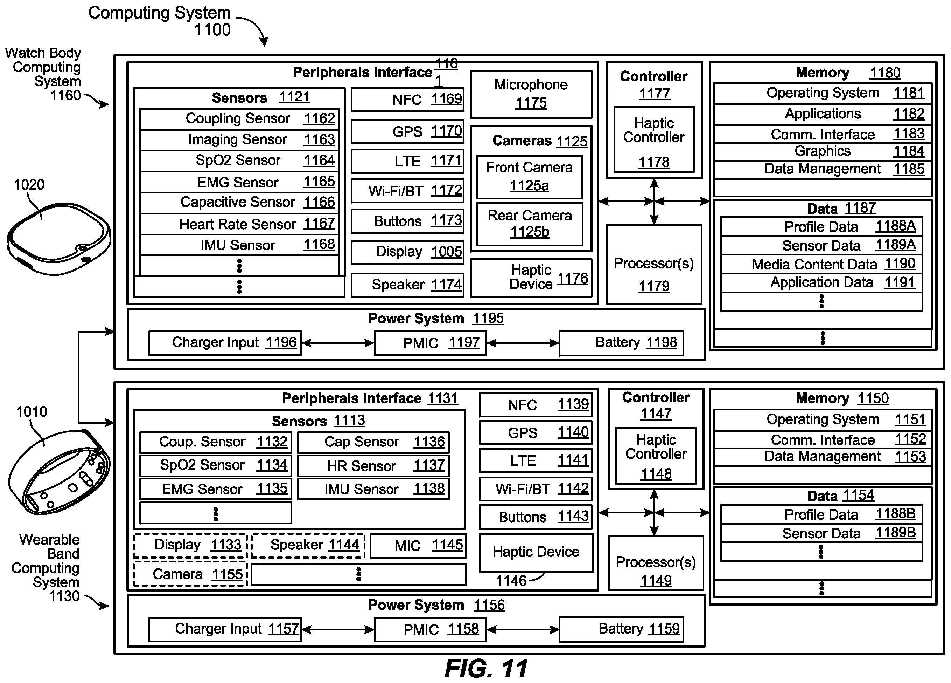

A wrist-wearable device 1000, which can be used for wrist-wearable device 602, 702, 802, 930, and one or more of its components, are described below in reference to FIGS. 10 and 11; head-wearable devices 1200 and 1300, which can respectively be used for AR glasses 604, 704 or VR headset 850, 920, and their one or more components are described below in reference to FIGS. 12-14.

Referring to FIG. 6, wrist-wearable device 602, AR glasses 604, and/or HIPD 606 can communicatively couple via a network 625 (e.g., cellular, near field, Wi-Fi, personal area network, wireless LAN, etc.). Additionally, wrist-wearable device 602, AR glasses 604, and/or HIPD 606 can also communicatively couple with one or more servers 630, computers 640 (e.g., laptops, computers, etc.), mobile devices 650 (e.g., smartphones, tablets, etc.), and/or other electronic devices via network 625 (e.g., cellular, near field, Wi-Fi, personal area network, wireless LAN, etc.).

In FIG. 6, a user 608 is shown wearing wrist-wearable device 602 and AR glasses 604 and having HIPD 606 on their desk. The wrist-wearable device 602, AR glasses 604, and HIPD 606 facilitate user interaction with an AR environment. In particular, as shown by first AR system 600, wrist-wearable device 602, AR glasses 604, and/or HIPD 606 cause presentation of one or more avatars 610, digital representations of contacts 612, and virtual objects 614. As discussed below, user 608 can interact with one or more avatars 610, digital representations of contacts 612, and virtual objects 614 via wrist-wearable device 602, AR glasses 604, and/or HIPD 606.

User 608 can use any of wrist-wearable device 602, AR glasses 604, and/or HIPD 606 to provide user inputs. For example, user 608 can perform one or more hand gestures that are detected by wrist-wearable device 602 (e.g., using one or more EMG sensors and/or IMUs, described below in reference to FIGS. 10 and 11) and/or AR glasses 604 (e.g., using one or more image sensor or camera, described below in reference to FIGS. 12-10) to provide a user input. Alternatively, or additionally, user 608 can provide a user input via one or more touch surfaces of wrist-wearable device 602, AR glasses 604, HIPD 606, and/or voice commands captured by a microphone of wrist-wearable device 602, AR glasses 604, and/or HIPD 606. In some examples, wrist-wearable device 602, AR glasses 604, and/or HIPD 606 include a digital assistant to help user 608 in providing a user input (e.g., completing a sequence of operations, suggesting different operations or commands, providing reminders, confirming a command, etc.). In some examples, user 608 can provide a user input via one or more facial gestures and/or facial expressions. For example, cameras of wrist-wearable device 602, AR glasses 604, and/or HIPD 606 can track eyes of user 608 for navigating a user interface.

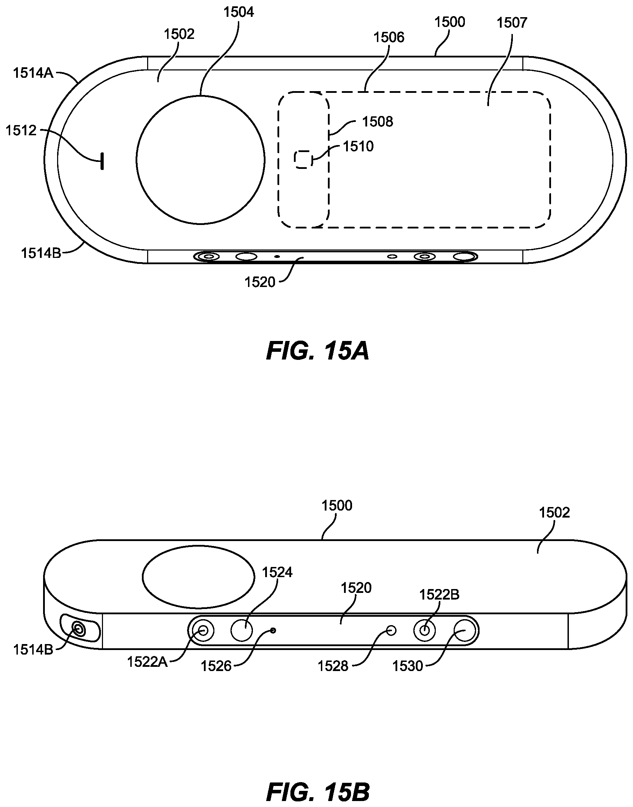

Wrist-wearable device 602, AR glasses 604, and/or HIPD 606 can operate alone or in conjunction to allow user 608 to interact with the AR environment. In some examples, HIPD 606 is configured to operate as a central hub or control center for the wrist-wearable device 602, AR glasses 604, and/or another communicatively coupled device. For example, user 608 can provide an input to interact with the AR environment at any of wrist-wearable device 602, AR glasses 604, and/or HIPD 606, and HIPD 606 can identify one or more back-end and front-end tasks to cause the performance of the requested interaction and distribute instructions to cause the performance of the one or more back-end and front-end tasks at wrist-wearable device 602, AR glasses 604, and/or HIPD 606. In some examples, a back-end task is a background processing task that is not perceptible by the user (e.g., rendering content, decompression, compression, etc.), and a front-end task is a user-facing task that is perceptible to the user (e.g., presenting information to the user, providing feedback to the user, etc.). As described below in reference to FIGS. 15-16, HIPD 606 can perform the back-end tasks and provide wrist-wearable device 602 and/or AR glasses 604 operational data corresponding to the performed back-end tasks such that wrist-wearable device 602 and/or AR glasses 604 can perform the front-end tasks. In this way, HIPD 606, which has more computational resources and greater thermal headroom than wrist-wearable device 602 and/or AR glasses 604, performs computationally intensive tasks and reduces the computer resource utilization and/or power usage of wrist-wearable device 602 and/or AR glasses 604.

In the example shown by first AR system 600, HIPD 606 identifies one or more back-end tasks and front-end tasks associated with a user request to initiate an AR video call with one or more other users (represented by avatar 610 and the digital representation of contact 612) and distributes instructions to cause the performance of the one or more back-end tasks and front-end tasks. In particular, HIPD 606 performs back-end tasks for processing and/or rendering image data (and other data) associated with the AR video call and provides operational data associated with the performed back-end tasks to AR glasses 604 such that the AR glasses 604 perform front-end tasks for presenting the AR video call (e.g., presenting avatar 610 and digital representation of contact 612).

In some examples, HIPD 606 can operate as a focal or anchor point for causing the presentation of information. This allows user 608 to be generally aware of where information is presented. For example, as shown in first AR system 600, avatar 610 and the digital representation of contact 612 are presented above HIPD 606. In particular, HIPD 606 and AR glasses 604 operate in conjunction to determine a location for presenting avatar 610 and the digital representation of contact 612. In some examples, information can be presented a predetermined distance from HIPD 606 (e.g., within 5 meters). For example, as shown in first AR system 600, virtual object 614 is presented on the desk some distance from HIPD 606. Similar to the above example, HIPD 606 and AR glasses 604 can operate in conjunction to determine a location for presenting virtual object 614. Alternatively, In some examples, presentation of information is not bound by HIPD 606. More specifically, avatar 610, digital representation of contact 612, and virtual object 614 do not have to be presented within a predetermined distance of HIPD 606.

User inputs provided at wrist-wearable device 602, AR glasses 604, and/or HIPD 606 are coordinated such that the user can use any device to initiate, continue, and/or complete an operation. For example, user 608 can provide a user input to AR glasses 604 to cause AR glasses 604 to present virtual object 614 and, while virtual object 614 is presented by AR glasses 604, user 608 can provide one or more hand gestures via wrist-wearable device 602 to interact and/or manipulate virtual object 614.

FIG. 7 shows a user 708 wearing a wrist-wearable device 702 and AR glasses 704, and holding an HIPD 706. In second AR system 700, the wrist-wearable device 702, AR glasses 704, and/or HIPD 706 are used to receive and/or provide one or more messages to a contact of user 708. In particular, wrist-wearable device 702, AR glasses 704, and/or HIPD 706 detect and coordinate one or more user inputs to initiate a messaging application and prepare a response to a received message via the messaging application.

In some examples, user 708 initiates, via a user input, an application on wrist-wearable device 702, AR glasses 704, and/or HIPD 706 that causes the application to initiate on at least one device. For example, in second AR system 700, user 708 performs a hand gesture associated with a command for initiating a messaging application (represented by messaging user interface 716), wrist-wearable device 702 detects the hand gesture and, based on a determination that user 708 is wearing AR glasses 704, causes AR glasses 704 to present a messaging user interface 716 of the messaging application. AR glasses 704 can present messaging user interface 716 to user 708 via its display (e.g., as shown by a field of view 718 of user 708). In some examples, the application is initiated and executed on the device (e.g., wrist-wearable device 702, AR glasses 704, and/or HIPD 706) that detects the user input to initiate the application, and the device provides another device operational data to cause the presentation of the messaging application. For example, wrist-wearable device 702 can detect the user input to initiate a messaging application, initiate and run the messaging application, and provide operational data to AR glasses 704 and/or HIPD 706 to cause presentation of the messaging application. Alternatively, the application can be initiated and executed at a device other than the device that detected the user input. For example, wrist-wearable device 702 can detect the hand gesture associated with initiating the messaging application and cause HIPD 706 to run the messaging application and coordinate the presentation of the messaging application.

Further, user 708 can provide a user input provided at wrist-wearable device 702, AR glasses 704, and/or HIPD 706 to continue and/or complete an operation initiated at another device. For example, after initiating the messaging application via wrist-wearable device 702 and while AR glasses 704 present messaging user interface 716, user 708 can provide an input at HIPD 706 to prepare a response (e.g., shown by the swipe gesture performed on HIPD 706). Gestures performed by user 708 on HIPD 706 can be provided and/or displayed on another device. For example, a swipe gestured performed on HIPD 706 is displayed on a virtual keyboard of messaging user interface 716 displayed by AR glasses 704.

In some examples, wrist-wearable device 702, AR glasses 704, HIPD 706, and/or any other communicatively coupled device can present one or more notifications to user 708. The notification can be an indication of a new message, an incoming call, an application update, a status update, etc. User 708 can select the notification via wrist-wearable device 702, AR glasses 704, and/or HIPD 706 and can cause presentation of an application or operation associated with the notification on at least one device. For example, user 708 can receive a notification that a message was received at wrist-wearable device 702, AR glasses 704, HIPD 706, and/or any other communicatively coupled device and can then provide a user input at wrist-wearable device 702, AR glasses 704, and/or HIPD 706 to review the notification, and the device detecting the user input can cause an application associated with the notification to be initiated and/or presented at wrist-wearable device 702, AR glasses 704, and/or HIPD 706.

While the above example describes coordinated inputs used to interact with a messaging application, user inputs can be coordinated to interact with any number of applications including, but not limited to, gaming applications, social media applications, camera applications, web-based applications, financial applications, etc. For example, AR glasses 704 can present to user 708 game application data, and HIPD 706 can be used as a controller to provide inputs to the game. Similarly, user 708 can use wrist-wearable device 702 to initiate a camera of AR glasses 704, and user 708 can use wrist-wearable device 702, AR glasses 704, and/or HIPD 706 to manipulate the image capture (e.g., zoom in or out, apply filters, etc.) and capture image data.

Users may interact with the devices disclosed herein in a variety of ways. For example, as shown in FIGS. 8A and 8B, a user 808 may interact with an AR system 800 by donning a VR headset 850 while holding HIPD 806 and wearing wrist-wearable device 802. In this example, AR system 800 may enable a user to interact with a game 810 by swiping their arm. One or more of VR headset 850, HIPD 806, and wrist-wearable device 802 may detect this gesture and, in response, may display a sword strike in game 810. Similarly, in FIGS. 9A and 9B, a user 908 may interact with an AR system 900 by donning a VR headset 920 while wearing haptic device 960 and wrist-wearable device 930. In this example, AR system 900 may enable a user to interact with a game 910 by swiping their arm. One or more of VR headset 920, haptic device 960, and wrist-wearable device 930 may detect this gesture and, in response, may display a spell being cast in game 810.

Having discussed example AR systems, devices for interacting with such AR systems and other computing systems more generally will now be discussed in greater detail. Some explanations of devices and components that can be included in some or all of the example devices discussed below are explained herein for ease of reference. Certain types of the components described below may be more suitable for a particular set of devices, and less suitable for a different set of devices. But subsequent reference to the components explained here should be considered to be encompassed by the descriptions provided.

In some examples discussed below, example devices and systems, including electronic devices and systems, will be addressed. Such example devices and systems are not intended to be limiting, and one of skill in the art will understand that alternative devices and systems to the example devices and systems described herein may be used to perform the operations and construct the systems and devices that are described herein.

An electronic device may be a device that uses electrical energy to perform a specific function. An electronic device can be any physical object that contains electronic components such as transistors, resistors, capacitors, diodes, and integrated circuits. Examples of electronic devices include smartphones, laptops, digital cameras, televisions, gaming consoles, and music players, as well as the example electronic devices discussed herein. As described herein, an intermediary electronic device may be a device that sits between two other electronic devices and/or a subset of components of one or more electronic devices and facilitates communication, data processing, and/or data transfer between the respective electronic devices and/or electronic components.

An integrated circuit may be an electronic device made up of multiple interconnected electronic components such as transistors, resistors, and capacitors. These components may be etched onto a small piece of semiconductor material, such as silicon. Integrated circuits may include analog integrated circuits, digital integrated circuits, mixed signal integrated circuits, and/or any other suitable type or form of integrated circuit. Examples of integrated circuits include application-specific integrated circuits (ASICs), processing units, central processing units (CPUs), co-processors, and accelerators.

Analog integrated circuits, such as sensors, power management circuits, and operational amplifiers, may process continuous signals and perform analog functions such as amplification, active filtering, demodulation, and mixing. Examples of analog integrated circuits include linear integrated circuits and radio frequency circuits.

Digital integrated circuits, which may be referred to as logic integrated circuits, may include microprocessors, microcontrollers, memory chips, interfaces, power management circuits, programmable devices, and/or any other suitable type or form of integrated circuit. In some examples, examples of integrated circuits include central processing units (CPUs),

Processing units, such as CPUs, may be electronic components that are responsible for executing instructions and controlling the operation of an electronic device (e.g., a computer). There are various types of processors that may be used interchangeably, or may be specifically required, by examples described herein. For example, a processor may be: (i) a general processor designed to perform a wide range of tasks, such as running software applications, managing operating systems, and performing arithmetic and logical operations; (ii) a microcontroller designed for specific tasks such as controlling electronic devices, sensors, and motors; (iii) an accelerator, such as a graphics processing unit (GPU), designed to accelerate the creation and rendering of images, videos, and animations (e.g., virtual-reality animations, such as three-dimensional modeling); (iv) a field-programmable gate array (FPGA) that can be programmed and reconfigured after manufacturing and/or can be customized to perform specific tasks, such as signal processing, cryptography, and machine learning; and/or (v) a digital signal processor (DSP) designed to perform mathematical operations on signals such as audio, video, and radio waves. One or more processors of one or more electronic devices may be used in various examples described herein.

Memory generally refers to electronic components in a computer or electronic device that store data and instructions for the processor to access and manipulate. Examples of memory can include: (i) random access memory (RAM) configured to store data and instructions temporarily; (ii) read-only memory (ROM) configured to store data and instructions permanently (e.g., one or more portions of system firmware, and/or boot loaders) and/or semi-permanently; (iii) flash memory, which can be configured to store data in electronic devices (e.g., USB drives, memory cards, and/or solid-state drives (SSDs)); and/or (iv) cache memory configured to temporarily store frequently accessed data and instructions. Memory, as described herein, can store structured data (e.g., SQL databases, MongoDB databases, GraphQL data, JSON data, etc.). Other examples of data stored in memory can include (i) profile data, including user account data, user settings, and/or other user data stored by the user, (ii) sensor data detected and/or otherwise obtained by one or more sensors, (iii) media content data including stored image data, audio data, documents, and the like, (iv) application data, which can include data collected and/or otherwise obtained and stored during use of an application, and/or any other types of data described herein.

Controllers may be electronic components that manage and coordinate the operation of other components within an electronic device (e.g., controlling inputs, processing data, and/or generating outputs). Examples of controllers can include: (i) microcontrollers, including small, low-power controllers that are commonly used in embedded systems and Internet of Things (IoT) devices; (ii) programmable logic controllers (PLCs) that may be configured to be used in industrial automation systems to control and monitor manufacturing processes; (iii) system-on-a-chip (SoC) controllers that integrate multiple components such as processors, memory, I/O interfaces, and other peripherals into a single chip; and/or (iv) DSPs.

A power system of an electronic device may be configured to convert incoming electrical power into a form that can be used to operate the device. A power system can include various components, such as (i) a power source, which can be an alternating current (AC) adapter or a direct current (DC) adapter power supply, (ii) a charger input, which can be configured to use a wired and/or wireless connection (which may be part of a peripheral interface, such as a USB, micro-USB interface, near-field magnetic coupling, magnetic inductive and magnetic resonance charging, and/or radio frequency (RF) charging), (iii) a power-management integrated circuit, configured to distribute power to various components of the device and to ensure that the device operates within safe limits (e.g., regulating voltage, controlling current flow, and/or managing heat dissipation), and/or (iv) a battery configured to store power to provide usable power to components of one or more electronic devices.

Peripheral interfaces may be electronic components (e.g., of electronic devices) that allow electronic devices to communicate with other devices or peripherals and can provide the ability to input and output data and signals. Examples of peripheral interfaces can include (i) universal serial bus (USB) and/or micro-USB interfaces configured for connecting devices to an electronic device, (ii) Bluetooth interfaces configured to allow devices to communicate with each other, including Bluetooth low energy (BLE), (iii) near field communication (NFC) interfaces configured to be short-range wireless interfaces for operations such as access control, (iv) POGO pins, which may be small, spring-loaded pins configured to provide a charging interface, (v) wireless charging interfaces, (vi) GPS interfaces, (vii) Wi-Fi interfaces for providing a connection between a device and a wireless network, and/or (viii) sensor interfaces.

Sensors may be electronic components (e.g., in and/or otherwise in electronic communication with electronic devices, such as wearable devices) configured to detect physical and environmental changes and generate electrical signals. Examples of sensors can include (i) imaging sensors for collecting imaging data (e.g., including one or more cameras disposed on a respective electronic device), (ii) biopotential-signal sensors, (iii) inertial measurement units (e.g., IMUs) for detecting, for example, angular rate, force, magnetic field, and/or changes in acceleration, (iv) heart rate sensors for measuring a user's heart rate, (v) SpO2 sensors for measuring blood oxygen saturation and/or other biometric data of a user, (vi) capacitive sensors for detecting changes in potential at a portion of a user's body (e.g., a sensor-skin interface), and/or (vii) light sensors (e.g., time-of-flight sensors, infrared light sensors, visible light sensors, etc.).

Biopotential-signal-sensing components may be devices used to measure electrical activity within the body (e.g., biopotential-signal sensors). Some types of biopotential-signal sensors include (i) electroencephalography (EEG) sensors configured to measure electrical activity in the brain to diagnose neurological disorders, (ii) electrocardiography (ECG or EKG) sensors configured to measure electrical activity of the heart to diagnose heart problems, (iii) electromyography (EMG) sensors configured to measure the electrical activity of muscles and to diagnose neuromuscular disorders, and (iv) electrooculography (EOG) sensors configure to measure the electrical activity of eye muscles to detect eye movement and diagnose eye disorders.

An application stored in memory of an electronic device (e.g., software) may include instructions stored in the memory. Examples of such applications include (i) games, (ii) word processors, (iii) messaging applications, (iv) media-streaming applications, (v) financial applications, (vi) calendars. (vii) clocks, and (viii) communication interface modules for enabling wired and/or wireless connections between different respective electronic devices (e.g., IEEE 1202.15.4, Wi-Fi, ZigBee, 6LoWPAN, Thread, Z-Wave, Bluetooth Smart, ISA100.11a, WirelessHART, or MiWi), custom or standard wired protocols (e.g., Ethernet or HomePlug), and/or any other suitable communication protocols).

A communication interface may be a mechanism that enables different systems or devices to exchange information and data with each other, including hardware, software, or a combination of both hardware and software. For example, a communication interface can refer to a physical connector and/or port on a device that enables communication with other devices (e.g., USB, Ethernet, HDMI, Bluetooth). In some examples, a communication interface can refer to a software layer that enables different software programs to communicate with each other (e.g., application programming interfaces (APIs), protocols like **HTTP** and TCP/IP, etc.).

A graphics module may be a component or software module that is designed to handle graphical operations and/or processes and can include a hardware module and/or a software module.

Non-transitory computer-readable storage media may be physical devices or storage media that can be used to store electronic data in a non-transitory form (e.g., such that the data is stored permanently until it is intentionally deleted or modified).

FIGS. 10 and 11 illustrate an example wrist-wearable device 1000 and an example computer system 1100. Wrist-wearable device 1000 is an instance of wearable device 602 described in FIG. 6 herein, such that the wearable device 602 should be understood to have the features of the wrist-wearable device 1000 and vice versa. FIG. 11 illustrates components of the wrist-wearable device 1000, which can be used individually or in combination, including combinations that include other electronic devices and/or electronic components.

FIG. 10 shows a wearable band 1010 and a watch body 1020 (or capsule) being coupled, as discussed below, to form wrist-wearable device 1000. Wrist-wearable device 1000 can perform various functions and/or operations associated with navigating through user interfaces and selectively opening applications as well as the functions and/or operations described above with reference to FIGS. 6-9B.

As will be described in more detail below, operations executed by wrist-wearable device 1000 can include (i) presenting content to a user (e.g., displaying visual content via a display 1005), (ii) detecting (e.g., sensing) user input (e.g., sensing a touch on peripheral button 1023 and/or at a touch screen of the display 1005, a hand gesture detected by sensors (e.g., biopotential sensors)), (iii) sensing biometric data (e.g., neuromuscular signals, heart rate, temperature, sleep, etc.) via one or more sensors 1013, messaging (e.g., text, speech, video, etc.); image capture via one or more imaging devices or cameras 1025, wireless communications (e.g., cellular, near field, Wi-Fi, personal area network, etc.), location determination, financial transactions, providing haptic feedback, providing alarms, providing notifications, providing biometric authentication, providing health monitoring, providing sleep monitoring, etc.

The above-example functions can be executed independently in watch body 1020, independently in wearable band 1010, and/or via an electronic communication between watch body 1020 and wearable band 1010. In some examples, functions can be executed on wrist-wearable device 1000 while an AR environment is being presented (e.g., via one of AR systems 600 to 900). The wearable devices described herein can also be used with other types of AR environments.

Wearable band 1010 can be configured to be worn by a user such that an inner surface of a wearable structure 1011 of wearable band 1010 is in contact with the user's skin. In this example, when worn by a user, sensors 1013 may contact the user's skin. In some examples, one or more of sensors 1013 can sense biometric data such as a user's heart rate, a saturated oxygen level, temperature, sweat level, neuromuscular signals, or a combination thereof. One or more of sensors 1013 can also sense data about a user's environment including a user's motion, altitude, location, orientation, gait, acceleration, position, or a combination thereof. In some examples, one or more of sensors 1013 can be configured to track a position and/or motion of wearable band 1010. One or more of sensors 1013 can include any of the sensors defined above and/or discussed below with respect to FIG. 10.

One or more of sensors 1013 can be distributed on an inside and/or an outside surface of wearable band 1010. In some examples, one or more of sensors 1013 are uniformly spaced along wearable band 1010. Alternatively, In some examples, one or more of sensors 1013 are positioned at distinct points along wearable band 1010. As shown in FIG. 10, one or more of sensors 1013 can be the same or distinct. For example, In some examples, one or more of sensors 1013 can be shaped as a pill (e.g., sensor 1013a), an oval, a circle a square, an oblong (e.g., sensor 1013c) and/or any other shape that maintains contact with the user's skin (e.g., such that neuromuscular signal and/or other biometric data can be accurately measured at the user's skin). In some examples, one or more sensors of 1013 are aligned to form pairs of sensors (e.g., for sensing neuromuscular signals based on differential sensing within each respective sensor). For example, sensor 1013b may be aligned with an adjacent sensor to form sensor pair 1014a and sensor 1013d may be aligned with an adjacent sensor to form sensor pair 1014b. In some examples, wearable band 1010 does not have a sensor pair. Alternatively, In some examples, wearable band 1010 has a predetermined number of sensor pairs (one pair of sensors, three pairs of sensors, four pairs of sensors, six pairs of sensors, sixteen pairs of sensors, etc.).

Wearable band 1010 can include any suitable number of sensors 1013. In some examples, the number and arrangement of sensors 1013 depends on the particular application for which wearable band 1010 is used. For instance, wearable band 1010 can be configured as an armband, wristband, or chest-band that include a plurality of sensors 1013 with different number of sensors 1013, a variety of types of individual sensors with the plurality of sensors 1013, and different arrangements for each use case, such as medical use cases as compared to gaming or general day-to-day use cases.

In accordance with some examples, wearable band 1010 further includes an electrical ground electrode and a shielding electrode. The electrical ground and shielding electrodes, like the sensors 1013, can be distributed on the inside surface of the wearable band 1010 such that they contact a portion of the user's skin. For example, the electrical ground and shielding electrodes can be at an inside surface of a coupling mechanism 1016 or an inside surface of a wearable structure 1011. The electrical ground and shielding electrodes can be formed and/or use the same components as sensors 1013. In some examples, wearable band 1010 includes more than one electrical ground electrode and more than one shielding electrode.

Sensors 1013 can be formed as part of wearable structure 1011 of wearable band 1010. In some examples, sensors 1013 are flush or substantially flush with wearable structure 1011 such that they do not extend beyond the surface of wearable structure 1011. While flush with wearable structure 1011, sensors 1013 are still configured to contact the user's skin (e.g., via a skin-contacting surface). Alternatively, In some examples, sensors 1013 extend beyond wearable structure 1011 a predetermined distance (e.g., 0.1 - 2 mm) to make contact and depress into the user's skin. In some examples, sensors 1013 are coupled to an actuator (not shown) configured to adjust an extension height (e.g., a distance from the surface of wearable structure 1011) of sensors 1013 such that sensors 1013 make contact and depress into the user's skin. In some examples, the actuators adjust the extension height between 0.01 mm - 1.2 mm. This may allow a the user to customize the positioning of sensors 1013 to improve the overall comfort of the wearable band 1010 when worn while still allowing sensors 1013 to contact the user's skin. In some examples, sensors 1013 are indistinguishable from wearable structure 1011 when worn by the user.

Wearable structure 1011 can be formed of an elastic material, elastomers, etc., configured to be stretched and fitted to be worn by the user. In some examples, wearable structure 1011 is a textile or woven fabric. As described above, sensors 1013 can be formed as part of a wearable structure 1011. For example, sensors 1013 can be molded into the wearable structure 1011, be integrated into a woven fabric (e.g., sensors 1013 can be sewn into the fabric and mimic the pliability of fabric and can and/or be constructed from a series woven strands of fabric).

Wearable structure 1011 can include flexible electronic connectors that interconnect sensors 1013, the electronic circuitry, and/or other electronic components (described below in reference to FIG. 11) that are enclosed in wearable band 1010. In some examples, the flexible electronic connectors are configured to interconnect sensors 1013, the electronic circuitry, and/or other electronic components of wearable band 1010 with respective sensors and/or other electronic components of another electronic device (e.g., watch body 1020). The flexible electronic connectors are configured to move with wearable structure 1011 such that the user adjustment to wearable structure 1011 (e.g., resizing, pulling, folding, etc.) does not stress or strain the electrical coupling of components of wearable band 1010.

As described above, wearable band 1010 is configured to be worn by a user. In particular, wearable band 1010 can be shaped or otherwise manipulated to be worn by a user. For example, wearable band 1010 can be shaped to have a substantially circular shape such that it can be configured to be worn on the user's lower arm or wrist. Alternatively, wearable band 1010 can be shaped to be worn on another body part of the user, such as the user's upper arm (e.g., around a bicep), forearm, chest, legs, etc. Wearable band 1010 can include a retaining mechanism 1012 (e.g., a buckle, a hook and loop fastener, etc.) for securing wearable band 1010 to the user's wrist or other body part. While wearable band 1010 is worn by the user, sensors 1013 sense data (referred to as sensor data) from the user's skin. In some examples, sensors 1013 of wearable band 1010 obtain (e.g., sense and record) neuromuscular signals.

The sensed data (e.g., sensed neuromuscular signals) can be used to detect and/or determine the user's intention to perform certain motor actions. In some examples, sensors 1013 may sense and record neuromuscular signals from the user as the user performs muscular activations (e.g., movements, gestures, etc.). The detected and/or determined motor actions (e.g., phalange (or digit) movements, wrist movements, hand movements, and/or other muscle intentions) can be used to determine control commands or control information (instructions to perform certain commands after the data is sensed) for causing a computing device to perform one or more input commands. For example, the sensed neuromuscular signals can be used to control certain user interfaces displayed on display 1005 of wrist-wearable device 1000 and/or can be transmitted to a device responsible for rendering an artificial-reality environment (e.g., a head-mounted display) to perform an action in an associated artificial-reality environment, such as to control the motion of a virtual device displayed to the user. The muscular activations performed by the user can include static gestures, such as placing the user's hand palm down on a table, dynamic gestures, such as grasping a physical or virtual object, and covert gestures that are imperceptible to another person, such as slightly tensing a joint by co-contracting opposing muscles or using sub-muscular activations. The muscular activations performed by the user can include symbolic gestures (e.g., gestures mapped to other gestures, interactions, or commands, for example, based on a gesture vocabulary that specifies the mapping of gestures to commands).

The sensor data sensed by sensors 1013 can be used to provide a user with an enhanced interaction with a physical object (e.g., devices communicatively coupled with wearable band 1010) and/or a virtual object in an artificial-reality application generated by an artificial-reality system (e.g., user interface objects presented on the display 1005, or another computing device (e.g., a smartphone)).

In some examples, wearable band 1010 includes one or more haptic devices 1146 (e.g., a vibratory haptic actuator) that are configured to provide haptic feedback (e.g., a cutaneous and/or kinesthetic sensation, etc.) to the user's skin. Sensors 1013 and/or haptic devices 1146 (shown in FIG. 11) can be configured to operate in conjunction with multiple applications including, without limitation, health monitoring, social media, games, and artificial reality (e.g., the applications associated with artificial reality).

Wearable band 1010 can also include coupling mechanism 1016 for detachably coupling a capsule (e.g., a computing unit) or watch body 1020 (via a coupling surface of the watch body 1020) to wearable band 1010. For example, a cradle or a shape of coupling mechanism 1016 can correspond to shape of watch body 1020 of wrist-wearable device 1000. In particular, coupling mechanism 1016 can be configured to receive a coupling surface proximate to the bottom side of watch body 1020 (e.g., a side opposite to a front side of watch body 1020 where display 1005 is located), such that a user can push watch body 1020 downward into coupling mechanism 1016 to attach watch body 1020 to coupling mechanism 1016. In some examples, coupling mechanism 1016 can be configured to receive a top side of the watch body 1020 (e.g., a side proximate to the front side of watch body 1020 where display 1005 is located) that is pushed upward into the cradle, as opposed to being pushed downward into coupling mechanism 1016. In some examples, coupling mechanism 1016 is an integrated component of wearable band 1010 such that wearable band 1010 and coupling mechanism 1016 are a single unitary structure. In some examples, coupling mechanism 1016 is a type of frame or shell that allows watch body 1020 coupling surface to be retained within or on wearable band 1010 coupling mechanism 1016 (e.g., a cradle, a tracker band, a support base, a clasp, etc.).

Coupling mechanism 1016 can allow for watch body 1020 to be detachably coupled to the wearable band 1010 through a friction fit, magnetic coupling, a rotation-based connector, a shear-pin coupler, a retention spring, one or more magnets, a clip, a pin shaft, a hook and loop fastener, or a combination thereof. A user can perform any type of motion to couple the watch body 1020 to wearable band 1010 and to decouple the watch body 1020 from the wearable band 1010. For example, a user can twist, slide, turn, push, pull, or rotate watch body 1020 relative to wearable band 1010, or a combination thereof, to attach watch body 1020 to wearable band 1010 and to detach watch body 1020 from wearable band 1010. Alternatively, as discussed below, In some examples, the watch body 1020 can be decoupled from the wearable band 1010 by actuation of a release mechanism 1029.

Wearable band 1010 can be coupled with watch body 1020 to increase the functionality of wearable band 1010 (e.g., converting wearable band 1010 into wrist-wearable device 1000, adding an additional computing unit and/or battery to increase computational resources and/or a battery life of wearable band 1010, adding additional sensors to improve sensed data, etc.). As described above, wearable band 1010 and coupling mechanism 1016 are configured to operate independently (e.g., execute functions independently) from watch body 1020. For example, coupling mechanism 1016 can include one or more sensors 1013 that contact a user's skin when wearable band 1010 is worn by the user, with or without watch body 1020 and can provide sensor data for determining control commands.

A user can detach watch body 1020 from wearable band 1010 to reduce the encumbrance of wrist-wearable device 1000 to the user. For examples in which watch body 1020 is removable, watch body 1020 can be referred to as a removable structure, such that in these examples wrist-wearable device 1000 includes a wearable portion (e.g., wearable band 1010) and a removable structure (e.g., watch body 1020).

Turning to watch body 1020, in some examples watch body 1020 can have a substantially rectangular or circular shape. Watch body 1020 is configured to be worn by the user on their wrist or on another body part. More specifically, watch body 1020 is sized to be easily carried by the user, attached on a portion of the user's clothing, and/or coupled to wearable band 1010 (forming the wrist-wearable device 1000). As described above, watch body 1020 can have a shape corresponding to coupling mechanism 1016 of wearable band 1010. In some examples, watch body 1020 includes a single release mechanism 1029 or multiple release mechanisms (e.g., two release mechanisms 1029 positioned on opposing sides of watch body 1020, such as spring-loaded buttons) for decoupling watch body 1020 from wearable band 1010. Release mechanism 1029 can include, without limitation, a button, a knob, a plunger, a handle, a lever, a fastener, a clasp, a dial, a latch, or a combination thereof.

A user can actuate release mechanism 1029 by pushing, turning, lifting, depressing, shifting, or performing other actions on release mechanism 1029. Actuation of release mechanism 1029 can release (e.g., decouple) watch body 1020 from coupling mechanism 1016 of wearable band 1010, allowing the user to use watch body 1020 independently from wearable band 1010 and vice versa. For example, decoupling watch body 1020 from wearable band 1010 can allow a user to capture images using rear-facing camera 1025b. Although release mechanism 1029 is shown positioned at a corner of watch body 1020, release mechanism 1029 can be positioned anywhere on watch body 1020 that is convenient for the user to actuate. In addition, In some examples, wearable band 1010 can also include a respective release mechanism for decoupling watch body 1020 from coupling mechanism 1016. In some examples, release mechanism 1029 is optional and watch body 1020 can be decoupled from coupling mechanism 1016 as described above (e.g., via twisting, rotating, etc.).

Watch body 1020 can include one or more peripheral buttons 1023 and 1027 for performing various operations at watch body 1020. For example, peripheral buttons 1023 and 1027 can be used to turn on or wake (e.g., transition from a sleep state to an active state) display 1005, unlock watch body 1020, increase or decrease a volume, increase or decrease a brightness, interact with one or more applications, interact with one or more user interfaces, etc. Additionally or alternatively, In some examples, display 1005 operates as a touch screen and allows the user to provide one or more inputs for interacting with watch body 1020.

In some examples, watch body 1020 includes one or more sensors 1021. Sensors 1021 of watch body 1020 can be the same or distinct from sensors 1013 of wearable band 1010. Sensors 1021 of watch body 1020 can be distributed on an inside and/or an outside surface of watch body 1020. In some examples, sensors 1021 are configured to contact a user's skin when watch body 1020 is worn by the user. For example, sensors 1021 can be placed on the bottom side of watch body 1020 and coupling mechanism 1016 can be a cradle with an opening that allows the bottom side of watch body 1020 to directly contact the user's skin. Alternatively, In some examples, watch body 1020 does not include sensors that are configured to contact the user's skin (e.g., including sensors internal and/or external to the watch body 1020 that are configured to sense data of watch body 1020 and the surrounding environment). In some examples, sensors 1021 are configured to track a position and/or motion of watch body 1020.

Watch body 1020 and wearable band 1010 can share data using a wired communication method (e.g., a Universal Asynchronous Receiver/Transmitter (UART), a USB transceiver, etc.) and/or a wireless communication method (e.g., near field communication, Bluetooth, etc.). For example, watch body 1020 and wearable band 1010 can share data sensed by sensors 1013 and 1021, as well as application and device specific information (e.g., active and/or available applications, output devices (e.g., displays, speakers, etc.), input devices (e.g., touch screens, microphones, imaging sensors, etc.).

In some examples, watch body 1020 can include, without limitation, a front-facing camera 1025a and/or a rear-facing camera 1025b, sensors 1021 (e.g., a biometric sensor, an IMU, a heart rate sensor, a saturated oxygen sensor, a neuromuscular signal sensor, an altimeter sensor, a temperature sensor, a bioimpedance sensor, a pedometer sensor, an optical sensor (e.g., imaging sensor 1163), a touch sensor, a sweat sensor, etc.). In some examples, watch body 1020 can include one or more haptic devices 1176 (e.g., a vibratory haptic actuator) that is configured to provide haptic feedback (e.g., a cutaneous and/or kinesthetic sensation, etc.) to the user. Sensors 1121 and/or haptic device 1176 can also be configured to operate in conjunction with multiple applications including, without limitation, health monitoring applications, social media applications, game applications, and artificial reality applications (e.g., the applications associated with artificial reality).

As described above, watch body 1020 and wearable band 1010, when coupled, can form wrist-wearable device 1000. When coupled, watch body 1020 and wearable band 1010 may operate as a single device to execute functions (operations, detections, communications, etc.) described herein. In some examples, each device may be provided with particular instructions for performing the one or more operations of wrist-wearable device 1000. For example, in accordance with a determination that watch body 1020 does not include neuromuscular signal sensors, wearable band 1010 can include alternative instructions for performing associated instructions (e.g., providing sensed neuromuscular signal data to watch body 1020 via a different electronic device). Operations of wrist-wearable device 1000 can be performed by watch body 1020 alone or in conjunction with wearable band 1010 (e.g., via respective processors and/or hardware components) and vice versa. In some examples, operations of wrist-wearable device 1000, watch body 1020, and/or wearable band 1010 can be performed in conjunction with one or more processors and/or hardware components.

As described below with reference to the block diagram of FIG. 11, wearable band 1010 and/or watch body 1020 can each include independent resources required to independently execute functions. For example, wearable band 1010 and/or watch body 1020 can each include a power source (e.g., a battery), a memory, data storage, a processor (e.g., a central processing unit (CPU)), communications, a light source, and/or input/output devices.

FIG. 11 shows block diagrams of a computing system 1130 corresponding to wearable band 1010 and a computing system 1160 corresponding to watch body 1020. Computing system 1100 of wrist-wearable device 1000 may include a combination of components of wearable band computing system 1130 and watch body computing system 1160.

Watch body 1020 and/or wearable band 1010 can include one or more components shown in watch body computing system 1160. In some examples, a single integrated circuit may include all or a substantial portion of the components of watch body computing system 1160 included in a single integrated circuit. Alternatively, In some examples, components of the watch body computing system 1160 may be included in a plurality of integrated circuits that are communicatively coupled. In some examples, watch body computing system 1160 may be configured to couple (e.g., via a wired or wireless connection) with wearable band computing system 1130, which may allow the computing systems to share components, distribute tasks, and/or perform other operations described herein (individually or as a single device).

Watch body computing system 1160 can include one or more processors 1179, a controller 1177, a peripherals interface 1161, a power system 1195, and memory (e.g., a memory 1180).

Power system 1195 can include a charger input 1196, a power-management integrated circuit (PMIC) 1197, and a battery 1198. In some examples, a watch body 1020 and a wearable band 1010 can have respective batteries (e.g., battery 1198 and 1159) and can share power with each other. Watch body 1020 and wearable band 1010 can receive a charge using a variety of techniques. In some examples, watch body 1020 and wearable band 1010 can use a wired charging assembly (e.g., power cords) to receive the charge. Alternatively, or in addition, watch body 1020 and/or wearable band 1010 can be configured for wireless charging. For example, a portable charging device can be designed to mate with a portion of watch body 1020 and/or wearable band 1010 and wirelessly deliver usable power to battery 1198 of watch body 1020 and/or battery 1159 of wearable band 1010. Watch body 1020 and wearable band 1010 can have independent power systems (e.g., power system 1195 and 1156, respectively) to enable each to operate independently. Watch body 1020 and wearable band 1010 can also share power (e.g., one can charge the other) via respective PMICs (e.g., PMICs 1197 and 1158) and charger inputs (e.g., 1157 and 1196) that can share power over power and ground conductors and/or over wireless charging antennas.

In some examples, peripherals interface 1161 can include one or more sensors 1121. Sensors 1121 can include one or more coupling sensors 1162 for detecting when watch body 1020 is coupled with another electronic device (e.g., a wearable band 1010). Sensors 1121 can include one or more imaging sensors 1163 (e.g., one or more of cameras 1125, and/or separate imaging sensors 1163 (e.g., thermal-imaging sensors)). In some examples, sensors 1121 can include one or more SpO2 sensors 1164. In some examples, sensors 1121 can include one or more biopotential-signal sensors (e.g., EMG sensors 1165, which may be disposed on an interior, user-facing portion of watch body 1020 and/or wearable band 1010). In some examples, sensors 1121 may include one or more capacitive sensors 1166. In some examples, sensors 1121 may include one or more heart rate sensors 1167. In some examples, sensors 1121 may include one or more IMU sensors 1168. In some examples, one or more IMU sensors 1168 can be configured to detect movement of a user's hand or other location where watch body 1020 is placed or held.

In some examples, one or more of sensors 1121 may provide an example human-machine interface. For example, a set of neuromuscular sensors, such as EMG sensors 1165, may be arranged circumferentially around wearable band 1010 with an interior surface of EMG sensors 1165 being configured to contact a user's skin. Any suitable number of neuromuscular sensors may be used (e.g., between 2 and 20 sensors). The number and arrangement of neuromuscular sensors may depend on the particular application for which the wearable device is used. For example, wearable band 1010 can be used to generate control information for controlling an augmented reality system, a robot, controlling a vehicle, scrolling through text, controlling a virtual avatar, or any other suitable control task.

In some examples, neuromuscular sensors may be coupled together using flexible electronics incorporated into the wireless device, and the output of one or more of the sensing components can be optionally processed using hardware signal processing circuitry (e.g., to perform amplification, filtering, and/or rectification). In other examples, at least some signal processing of the output of the sensing components can be performed in software such as processors 1179. Thus, signal processing of signals sampled by the sensors can be performed in hardware, software, or by any suitable combination of hardware and software, as aspects of the technology described herein are not limited in this respect.

Neuromuscular signals may be processed in a variety of ways. For example, the output of EMG sensors 1165 may be provided to an analog front end, which may be configured to perform analog processing (e.g., amplification, noise reduction, filtering, etc.) on the recorded signals. The processed analog signals may then be provided to an analog-to-digital converter, which may convert the analog signals to digital signals that can be processed by one or more computer processors. Furthermore, although this example is as discussed in the context of interfaces with EMG sensors, the embodiments described herein can also be implemented in wearable interfaces with other types of sensors including, but not limited to, mechanomyography (MMG) sensors, sonomyography (SMG) sensors, and electrical impedance tomography (EIT) sensors.

In some examples, peripherals interface 1161 includes a near-field communication (NFC) component 1169, a global-position system (GPS) component 1170, a long-term evolution (LTE) component 1171, and/or a Wi-Fi and/or Bluetooth communication component 1172. In some examples, peripherals interface 1161 includes one or more buttons 1173 (e.g., peripheral buttons 1023 and 1027 in FIG. 10), which, when selected by a user, cause operation to be performed at watch body 1020. In some examples, the peripherals interface 1161 includes one or more indicators, such as a light emitting diode (LED), to provide a user with visual indicators (e.g., message received, low battery, active microphone and/or camera, etc.).

Watch body 1020 can include at least one display 1005 for displaying visual representations of information or data to a user, including user-interface elements and/or three-dimensional virtual objects. The display can also include a touch screen for inputting user inputs, such as touch gestures, swipe gestures, and the like. Watch body 1020 can include at least one speaker 1174 and at least one microphone 1175 for providing audio signals to the user and receiving audio input from the user. The user can provide user inputs through microphone 1175 and can also receive audio output from speaker 1174 as part of a haptic event provided by haptic controller 1178. Watch body 1020 can include at least one camera 1125, including a front camera 1125a and a rear camera 1125b. Cameras 1125 can include ultra-wide-angle cameras, wide angle cameras, fish-eye cameras, spherical cameras, telephoto cameras, depth-sensing cameras, or other types of cameras.

Watch body computing system 1160 can include one or more haptic controllers 1178 and associated componentry (e.g., haptic devices 1176) for providing haptic events at watch body 1020 (e.g., a vibrating sensation or audio output in response to an event at the watch body 1020). Haptic controllers 1178 can communicate with one or more haptic devices 1176, such as electroacoustic devices, including a speaker of the one or more speakers 1174 and/or other audio components and/or electromechanical devices that convert energy into linear motion such as a motor, solenoid, electroactive polymer, piezoelectric actuator, electrostatic actuator, or other tactile output generating components (e.g., a component that converts electrical signals into tactile outputs on the device). Haptic controller 1178 can provide haptic events to that are capable of being sensed by a user of watch body 1020. In some examples, one or more haptic controllers 1178 can receive input signals from an application of applications 1182.

In some examples, wearable band computing system 1130 and/or watch body computing system 1160 can include memory 1180, which can be controlled by one or more memory controllers of controllers 1177. In some examples, software components stored in memory 1180 include one or more applications 1182 configured to perform operations at the watch body 1020. In some examples, one or more applications 1182 may include games, word processors, messaging applications, calling applications, web browsers, social media applications, media streaming applications, financial applications, calendars, clocks, etc. In some examples, software components stored in memory 1180 include one or more communication interface modules 1183 as defined above. In some examples, software components stored in memory 1180 include one or more graphics modules 1184 for rendering, encoding, and/or decoding audio and/or visual data and one or more data management modules 1185 for collecting, organizing, and/or providing access to data 1187 stored in memory 1180. In some examples, one or more of applications 1182 and/or one or more modules can work in conjunction with one another to perform various tasks at the watch body 1020.

In some examples, software components stored in memory 1180 can include one or more operating systems 1181 (e.g., a Linux-based operating system, an Android operating system, etc.). Memory 1180 can also include data 1187. Data 1187 can include profile data 1188A, sensor data 1189A, media content data 1190, and application data 1191.

It should be appreciated that watch body computing system 1160 is an example of a computing system within watch body 1020, and that watch body 1020 can have more or fewer components than shown in watch body computing system 1160, can combine two or more components, and/or can have a different configuration and/or arrangement of the components. The various components shown in watch body computing system 1160 are implemented in hardware, software, firmware, or a combination thereof, including one or more signal processing and/or application-specific integrated circuits.

Turning to the wearable band computing system 1130, one or more components that can be included in wearable band 1010 are shown. Wearable band computing system 1130 can include more or fewer components than shown in watch body computing system 1160, can combine two or more components, and/or can have a different configuration and/or arrangement of some or all of the components. In some examples, all, or a substantial portion of the components of wearable band computing system 1130 are included in a single integrated circuit. Alternatively, In some examples, components of wearable band computing system 1130 are included in a plurality of integrated circuits that are communicatively coupled. As described above, In some examples, wearable band computing system 1130 is configured to couple (e.g., via a wired or wireless connection) with watch body computing system 1160, which allows the computing systems to share components, distribute tasks, and/or perform other operations described herein (individually or as a single device).

Wearable band computing system 1130, similar to watch body computing system 1160, can include one or more processors 1149, one or more controllers 1147 (including one or more haptics controllers 1148), a peripherals interface 1131 that can includes one or more sensors 1113 and other peripheral devices, a power source (e.g., a power system 1156), and memory (e.g., a memory 1150) that includes an operating system (e.g., an operating system 1151), data (e.g., data 1154 including profile data 1188B, sensor data 1189B, etc.), and one or more modules (e.g., a communications interface module 1152, a data management module 1153, etc.).

One or more of sensors 1113 can be analogous to sensors 1121 of watch body computing system 1160. For example, sensors 1113 can include one or more coupling sensors 1132, one or more SpO2 sensors 1134, one or more EMG sensors 1135, one or more capacitive sensors 1136, one or more heart rate sensors 1137, and one or more IMU sensors 1138.

Peripherals interface 1131 can also include other components analogous to those included in peripherals interface 1161 of watch body computing system 1160, including an NFC component 1139, a GPS component 1140, an LTE component 1141, a Wi-Fi and/or Bluetooth communication component 1142, and/or one or more haptic devices 1146 as described above in reference to peripherals interface 1161. In some examples, peripherals interface 1131 includes one or more buttons 1143, a display 1133, a speaker 1144, a microphone 1145, and a camera 1155. In some examples, peripherals interface 1131 includes one or more indicators, such as an LED.

It should be appreciated that wearable band computing system 1130 is an example of a computing system within wearable band 1010, and that wearable band 1010 can have more or fewer components than shown in wearable band computing system 1130, combine two or more components, and/or have a different configuration and/or arrangement of the components. The various components shown in wearable band computing system 1130 can be implemented in one or more of a combination of hardware, software, or firmware, including one or more signal processing and/or application-specific integrated circuits.

Wrist-wearable device 1000 with respect to FIG. 10 is an example of wearable band 1010 and watch body 1020 coupled together, so wrist-wearable device 1000 will be understood to include the components shown and described for wearable band computing system 1130 and watch body computing system 1160. In some examples, wrist-wearable device 1000 has a split architecture (e.g., a split mechanical architecture, a split electrical architecture, etc.) between watch body 1020 and wearable band 1010. In other words, all of the components shown in wearable band computing system 1130 and watch body computing system 1160 can be housed or otherwise disposed in a combined wrist-wearable device 1000 or within individual components of watch body 1020, wearable band 1010, and/or portions thereof (e.g., a coupling mechanism 1016 of wearable band 1010).

The techniques described above can be used with any device for sensing neuromuscular signals but could also be used with other types of wearable devices for sensing neuromuscular signals (such as body-wearable or head-wearable devices that might have neuromuscular sensors closer to the brain or spinal column).

In some examples, wrist-wearable device 1000 can be used in conjunction with a head-wearable device (e.g., AR glasses 1200 and VR system 1310) and/or an HIPD 1500 described below, and wrist-wearable device 1000 can also be configured to be used to allow a user to control any aspect of the artificial reality (e.g., by using EMG-based gestures to control user interface objects in the artificial reality and/or by allowing a user to interact with the touchscreen on the wrist-wearable device to also control aspects of the artificial reality). Having thus described example wrist-wearable devices, attention will now be turned to example head-wearable devices, such AR glasses 1200 and VR headset 1310.

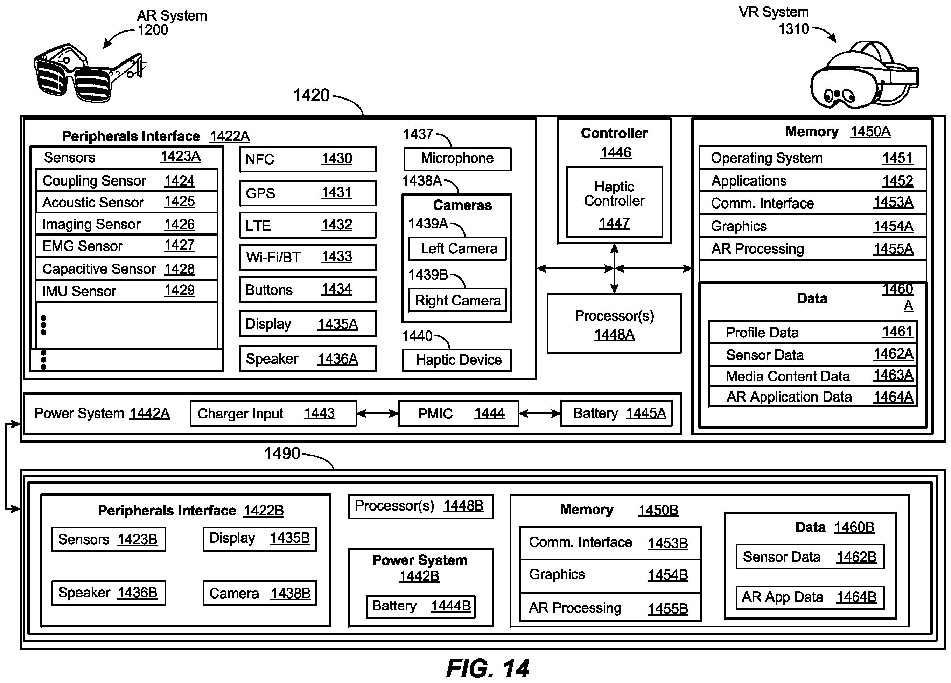

FIGS. 12 to 14 show example artificial-reality systems, which can be used as or in connection with wrist-wearable device 1000. In some examples, AR system 1200 includes an eyewear device 1202, as shown in FIG. 12. In some examples, VR system 1310 includes a head-mounted display (HMD) 1312, as shown in FIGS. 13A and 13B. In some examples, AR system 1200 and VR system 1310 can include one or more analogous components (e.g., components for presenting interactive artificial-reality environments, such as processors, memory, and/or presentation devices, including one or more displays and/or one or more waveguides), some of which are described in more detail with respect to FIG. 14. As described herein, a head-wearable device can include components of eyewear device 1202 and/or head-mounted display 1312. Some examples of head-wearable devices do not include any displays, including any of the displays described with respect to AR system 1200 and/or VR system 1310. While the example artificial-reality systems are respectively described herein as AR system 1200 and VR system 1310, either or both of the example AR systems described herein can be configured to present fully-immersive virtual-reality scenes presented in substantially all of a user's field of view or subtler augmented-reality scenes that are presented within a portion, less than all, of the user's field of view.

FIG. 12 show an example visual depiction of AR system 1200, including an eyewear device 1202 (which may also be described herein as augmented-reality glasses, and/or smart glasses). AR system 1200 can include additional electronic components that are not shown in FIG. 12, such as a wearable accessory device and/or an intermediary processing device, in electronic communication or otherwise configured to be used in conjunction with the eyewear device 1202. In some examples, the wearable accessory device and/or the intermediary processing device may be configured to couple with eyewear device 1202 via a coupling mechanism in electronic communication with a coupling sensor 1424 (FIG. 14), where coupling sensor 1424 can detect when an electronic device becomes physically or electronically coupled with eyewear device 1202. In some examples, eyewear device 1202 can be configured to couple to a housing 1490 (FIG. 14), which may include one or more additional coupling mechanisms configured to couple with additional accessory devices. The components shown in FIG. 12 can be implemented in hardware, software, firmware, or a combination thereof, including one or more signal-processing components and/or application-specific integrated circuits (ASICs).

Eyewear device 1202 includes mechanical glasses components, including a frame 1204 configured to hold one or more lenses (e.g., one or both lenses 1206-1 and 1206-2). One of ordinary skill in the art will appreciate that eyewear device 1202 can include additional mechanical components, such as hinges configured to allow portions of frame 1204 of eyewear device 1202 to be folded and unfolded, a bridge configured to span the gap between lenses 1206-1 and 1206-2 and rest on the user's nose, nose pads configured to rest on the bridge of the nose and provide support for eyewear device 1202, earpieces configured to rest on the user's ears and provide additional support for eyewear device 1202, temple arms configured to extend from the hinges to the earpieces of eyewear device 1202, and the like. One of ordinary skill in the art will further appreciate that some examples of AR system 1200 can include none of the mechanical components described herein. For example, smart contact lenses configured to present artificial reality to users may not include any components of eyewear device 1202.

Eyewear device 1202 includes electronic components, many of which will be described in more detail below with respect to FIG. 10. Some example electronic components are illustrated in FIG. 12, including acoustic sensors 1225-1, 1225-2, 1225-3, 1225-4, 1225-5, and 1225-6, which can be distributed along a substantial portion of the frame 1204 of eyewear device 1202. Eyewear device 1202 also includes a left camera 1239A and a right camera 1239B, which are located on different sides of the frame 1204. Eyewear device 1202 also includes a processor 1248 (or any other suitable type or form of integrated circuit) that is embedded into a portion of the frame 1204.

FIGS. 13A and 13B show a VR system 1310 that includes a head-mounted display (HMD) 1312 (e.g., also referred to herein as an artificial-reality headset, a head-wearable device, a VR headset, etc.). As noted, some artificial-reality systems (e.g., AR system 1200) may, instead of blending an artificial reality with actual reality, substantially replace one or more of a user's visual and/or other sensory perceptions of the real world with a virtual experience (e.g., AR systems 800 and 900).

HMD 1312 includes a front body 1314 and a frame 1316 (e.g., a strap or band) shaped to fit around a user's head. In some examples, front body 1314 and/or frame 1316 include one or more electronic elements for facilitating presentation of and/or interactions with an AR and/or VR system (e.g., displays, IMUs, tracking emitter or detectors). In some examples, HMD 1312 includes output audio transducers (e.g., an audio transducer 1318), as shown in FIG. 13B. In some examples, one or more components, such as the output audio transducer(s) 1318 and frame 1316, can be configured to attach and detach (e.g., are detachably attachable) to HMD 1312 (e.g., a portion or all of frame 1316, and/or audio transducer 1318), as shown in FIG. 13B. In some examples, coupling a detachable component to HMD 1312 causes the detachable component to come into electronic communication with HMD 1312.

FIGS. 13A and 13B also show that VR system 1310 includes one or more cameras, such as left camera 1339A and right camera 1339B, which can be analogous to left and right cameras 1239A and 1239B on frame 1204 of eyewear device 1202. In some examples, VR system 1310 includes one or more additional cameras (e.g., cameras 1339C and 1339D), which can be configured to augment image data obtained by left and right cameras 1339A and 1339B by providing more information. For example, camera 1339C can be used to supply color information that is not discerned by cameras 1339A and 1339B. In some examples, one or more of cameras 1339A to 1339D can include an optional IR cut filter configured to remove IR light from being received at the respective camera sensors.

FIG. 14 illustrates a computing system 1420 and an optional housing 1490, each of which show components that can be included in AR system 1200 and/or VR system 1310. In some examples, more or fewer components can be included in optional housing 1490 depending on practical restraints of the respective AR system being described.

In some examples, computing system 1420 can include one or more peripherals interfaces 1422A and/or optional housing 1490 can include one or more peripherals interfaces 1422B. Each of computing system 1420 and optional housing 1490 can also include one or more power systems 1442A and 1442B, one or more controllers 1446 (including one or more haptic controllers 1447), one or more processors 1448A and 1448B (as defined above, including any of the examples provided), and memory 1450A and 1450B, which can all be in electronic communication with each other. For example, the one or more processors 1448A and 1448B can be configured to execute instructions stored in memory 1450A and 1450B, which can cause a controller of one or more of controllers 1446 to cause operations to be performed at one or more peripheral devices connected to peripherals interface 1422A and/or 1422B. In some examples, each operation described can be powered by electrical power provided by power system 1442A and/or 1442B.

In some examples, peripherals interface 1422A can include one or more devices configured to be part of computing system 1420, some of which have been defined above and/or described with respect to the wrist-wearable devices shown in FIGS. 10 and 11. For example, peripherals interface 1422A can include one or more sensors 1423A. Some example sensors 1423A include one or more coupling sensors 1424, one or more acoustic sensors 1425, one or more imaging sensors 1426, one or more EMG sensors 1427, one or more capacitive sensors 1428, one or more IMU sensors 1429, and/or any other types of sensors explained above or described with respect to any other examples discussed herein.

In some examples, peripherals interfaces 1422A and 1422B can include one or more additional peripheral devices, including one or more NFC devices 1430, one or more GPS devices 1431, one or more LTE devices 1432, one or more Wi-Fi and/or Bluetooth devices 1433, one or more buttons 1434 (e.g., including buttons that are slidable or otherwise adjustable), one or more displays 1435A and 1435B, one or more speakers 1436A and 1436B, one or more microphones 1437, one or more cameras 1438A and 1438B (e.g., including the left camera 1439A and/or a right camera 1439B), one or more haptic devices 1440, and/or any other types of peripheral devices defined above or described with respect to any other examples discussed herein.

AR systems can include a variety of types of visual feedback mechanisms (e.g., presentation devices). For example, display devices in AR system 1200 and/or VR system 1310 can include one or more liquid-crystal displays (LCDs), light emitting diode (LED) displays, organic LED (OLED) displays, and/or any other suitable types of display screens. Artificial-reality systems can include a single display screen (e.g., configured to be seen by both eyes), and/or can provide separate display screens for each eye, which can allow for additional flexibility for varifocal adjustments and/or for correcting a refractive error associated with a user's vision. Some examples of AR systems also include optical subsystems having one or more lenses (e.g., conventional concave or convex lenses, Fresnel lenses, or adjustable liquid lenses) through which a user can view a display screen.

For example, respective displays 1435A and 1435B can be coupled to each of the lenses 1206-1 and 1206-2 of AR system 1200. Displays 1435A and 1435B may be coupled to each of lenses 1206-1 and 1206-2, which can act together or independently to present an image or series of images to a user. In some examples, AR system 1200 includes a single display 1435A or 1435B (e.g., a near-eye display) or more than two displays 1435A and 1435B. In some examples, a first set of one or more displays 1435A and 1435B can be used to present an augmented-reality environment, and a second set of one or more display devices 1435A and 1435B can be used to present a virtual-reality environment. In some examples, one or more waveguides are used in conjunction with presenting artificial-reality content to the user of AR system 1200 (e.g., as a means of delivering light from one or more displays 1435A and 1435B to the user's eyes). In some examples, one or more waveguides are fully or partially integrated into the eyewear device 1202. Additionally, or alternatively to display screens, some artificial-reality systems include one or more projection systems. For example, display devices in AR system 1200 and/or VR system 1310 can include micro-LED projectors that project light (e.g., using a waveguide) into display devices, such as clear combiner lenses that allow ambient light to pass through. The display devices can refract the projected light toward a user's pupil and can enable a user to simultaneously view both artificial-reality content and the real world. Artificial-reality systems can also be configured with any other suitable type or form of image projection system. In some examples, one or more waveguides are provided additionally or alternatively to the one or more display(s) 1435A and 1435B.

Computing system 1420 and/or optional housing 1490 of AR system 1200 or VR system 1310 can include some or all of the components of a power system 1442A and 1442B. Power systems 1442A and 1442B can include one or more charger inputs 1443, one or more PMICs 1444, and/or one or more batteries 1445A and 1444B.

Memory 1450A and 1450B may include instructions and data, some or all of which may be stored as non-transitory computer-readable storage media within the memories 1450A and 1450B. For example, memory 1450A and 1450B can include one or more operating systems 1451, one or more applications 1452, one or more communication interface applications 1453A and 1453B, one or more graphics applications 1454A and 1454B, one or more AR processing applications 1455A and 1455B, and/or any other types of data defined above or described with respect to any other examples discussed herein.

Memory 1450A and 1450B also include data 1460A and 1460B, which can be used in conjunction with one or more of the applications discussed above. Data 1460A and 1460B can include profile data 1461, sensor data 1462A and 1462B, media content data 1463A, AR application data 1464A and 1464B, and/or any other types of data defined above or described with respect to any other examples discussed herein.

In some examples, controller 1446 of eyewear device 1202 may process information generated by sensors 1423A and/or 1423B on eyewear device 1202 and/or another electronic device within AR system 1200. For example, controller 1446 can process information from acoustic sensors 1225-1 and 1225-2. For each detected sound, controller 1446 can perform a direction of arrival (DOA) estimation to estimate a direction from which the detected sound arrived at eyewear device 1202 of R system 1200. As one or more of acoustic sensors 1425 (e.g., the acoustic sensors 1225-1, 1225-2) detects sounds, controller 1446 can populate an audio data set with the information (e.g., represented in FIG. 10 as sensor data 1462A and 1462B).

In some examples, a physical electronic connector can convey information between eyewear device 1202 and another electronic device and/or between one or more processors 1248, 1448A, 1448B of AR system 1200 or VR system 1310 and controller 1446. The information can be in the form of optical data, electrical data, wireless data, or any other transmittable data form. Moving the processing of information generated by eyewear device 1202 to an intermediary processing device can reduce weight and heat in the eyewear device, making it more comfortable and safer for a user. In some examples, an optional wearable accessory device (e.g., an electronic neckband) is coupled to eyewear device 1202 via one or more connectors. The connectors can be wired or wireless connectors and can include electrical and/or non-electrical (e.g., structural) components. In some examples, eyewear device 1202 and the wearable accessory device can operate independently without any wired or wireless connection between them.

In some situations, pairing external devices, such as an intermediary processing device (e.g., HIPD 606, 706, 806) with eyewear device 1202 (e.g., as part of AR system 1200) enables eyewear device 1202 to achieve a similar form factor of a pair of glasses while still providing sufficient battery and computation power for expanded capabilities. Some, or all, of the battery power, computational resources, and/or additional features of AR system 1200 can be provided by a paired device or shared between a paired device and eyewear device 1202, thus reducing the weight, heat profile, and form factor of eyewear device 1202 overall while allowing eyewear device 1202 to retain its desired functionality. For example, the wearable accessory device can allow components that would otherwise be included on eyewear device 1202 to be included in the wearable accessory device and/or intermediary processing device, thereby shifting a weight load from the user's head and neck to one or more other portions of the user's body. In some examples, the intermediary processing device has a larger surface area over which to diffuse and disperse heat to the ambient environment. Thus, the intermediary processing device can allow for greater battery and computation capacity than might otherwise have been possible on eyewear device 1202 standing alone. Because weight carried in the wearable accessory device can be less invasive to a user than weight carried in the eyewear device 1202, a user may tolerate wearing a lighter eyewear device and carrying or wearing the paired device for greater lengths of time than the user would tolerate wearing a heavier eyewear device standing alone, thereby enabling an artificial-reality environment to be incorporated more fully into a user's day-to-day activities.

AR systems can include various types of computer vision components and subsystems. For example, AR system 1200 and/or VR system 1310 can include one or more optical sensors such as two-dimensional (2D) or three-dimensional (3D) cameras, time-of-flight depth sensors, structured light transmitters and detectors, single-beam or sweeping laser rangefinders, 3D LiDAR sensors, and/or any other suitable type or form of optical sensor. An AR system can process data from one or more of these sensors to identify a location of a user and/or aspects of the use's real-world physical surroundings, including the locations of real-world objects within the real-world physical surroundings. In some examples, the methods described herein are used to map the real world, to provide a user with context about real-world surroundings, and/or to generate digital twins (e.g., interactable virtual objects), among a variety of other functions. For example, FIGS. 13A and 13B show VR system 1310 having cameras 1339A to 1339D, which can be used to provide depth information for creating a voxel field and a two-dimensional mesh to provide object information to the user to avoid collisions.

In some examples, AR system 1200 and/or VR system 1310 can include haptic (tactile) feedback systems, which may be incorporated into headwear, gloves, body suits, handheld controllers, environmental devices (e.g., chairs or floormats), and/or any other type of device or system, such as the wearable devices discussed herein. The haptic feedback systems may provide various types of cutaneous feedback, including vibration, force, traction, shear, texture, and/or temperature. The haptic feedback systems may also provide various types of kinesthetic feedback, such as motion and compliance. The haptic feedback may be implemented using motors, piezoelectric actuators, fluidic systems, and/or a variety of other types of feedback mechanisms. The haptic feedback systems may be implemented independently of other artificial-reality devices, within other artificial-reality devices, and/or in conjunction with other artificial-reality devices.

In some examples of an artificial reality system, such as AR system 1200 and/or VR system 1310, ambient light (e.g., a live feed of the surrounding environment that a user would normally see) can be passed through a display element of a respective head-wearable device presenting aspects of the AR system. In some examples, ambient light can be passed through a portion less that is less than all of an AR environment presented within a user's field of view (e.g., a portion of the AR environment co-located with a physical object in the user's real-world environment that is within a designated boundary (e.g., a guardian boundary) configured to be used by the user while they are interacting with the AR environment). For example, a visual user interface element (e.g., a notification user interface element) can be presented at the head-wearable device, and an amount of ambient light (e.g., 15-50% of the ambient light) can be passed through the user interface element such that the user can distinguish at least a portion of the physical environment over which the user interface element is being displayed.

FIGS. 15A and 15B illustrate an example handheld intermediary processing device (HIPD) 1500. HIPD 1500 is an instance of the intermediary device described herein, such that HIPD 1500 should be understood to have the features described with respect to any intermediary device defined above or otherwise described herein and vice versa. FIG. 15A shows a top view and FIG. 15B shows a side view of the HIPD 1500. HIPD 1500 is configured to communicatively couple with one or more wearable devices (or other electronic devices) associated with a user. For example, HIPD 1500 is configured to communicatively couple with a user's wrist-wearable device 602, 702 (or components thereof, such as watch body 1020 and wearable band 1010), AR glasses 1200, and/or VR headset 850 and 1300. HIPD 1500 can be configured to be held by a user (e.g., as a handheld controller), carried on the user's person (e.g., in their pocket, in their bag, etc.), placed in proximity of the user (e.g., placed on their desk while seated at their desk, on a charging dock, etc.), and/or placed at or within a predetermined distance from a wearable device or other electronic device (e.g., where, In some examples, the predetermined distance is the maximum distance (e.g., 10 meters) at which HIPD 1500 can successfully be communicatively coupled with an electronic device, such as a wearable device).

HIPD 1500 can perform various functions independently and/or in conjunction with one or more wearable devices (e.g., wrist-wearable device 602, AR glasses 1200, VR system 1310, etc.). HIPD 1500 can be configured to increase and/or improve the functionality of communicatively coupled devices, such as the wearable devices. HIPD 1500 can be configured to perform one or more functions or operations associated with interacting with user interfaces and applications of communicatively coupled devices, interacting with an AR environment, interacting with VR environment, and/or operating as a human-machine interface controller, as well as functions and/or operations described above with reference to FIGS. 6-8B. Additionally, as will be described in more detail below, functionality and/or operations of HIPD 1500 can include, without limitation, task offloading and/or handoffs; thermals offloading and/or handoffs; six degrees of freedom (6DoF) raycasting and/or gaming (e.g., using imaging devices or cameras 1514A, 1514B, which can be used for simultaneous localization and mapping (SLAM) and/or with other image processing techniques), portable charging, messaging, image capturing via one or more imaging devices or cameras 1522A and 1522B, sensing user input (e.g., sensing a touch on a touch input surface 1502), wireless communications and/or interlining (e.g., cellular, near field, Wi-Fi, personal area network, etc.), location determination, financial transactions, providing haptic feedback, alarms, notifications, biometric authentication, health monitoring, sleep monitoring, etc. The above-described example functions can be executed independently in HIPD 1500 and/or in communication between HIPD 1500 and another wearable device described herein. In some examples, functions can be executed on HIPD 1500 in conjunction with an AR environment. As the skilled artisan will appreciate upon reading the descriptions provided herein that HIPD 1500 can be used with any type of suitable AR environment.

While HIPD 1500 is communicatively coupled with a wearable device and/or other electronic device, HIPD 1500 is configured to perform one or more operations initiated at the wearable device and/or the other electronic device. In particular, one or more operations of the wearable device and/or the other electronic device can be offloaded to HIPD 1500 to be performed. HIPD 1500 performs the one or more operations of the wearable device and/or the other electronic device and provides to data corresponded to the completed operations to the wearable device and/or the other electronic device. For example, a user can initiate a video stream using AR glasses 1200 and back-end tasks associated with performing the video stream (e.g., video rendering) can be offloaded to HIPD 1500, which HIPD 1500 performs and provides corresponding data to AR glasses 1200 to perform remaining front-end tasks associated with the video stream (e.g., presenting the rendered video data via a display of AR glasses 1200). In this way, HIPD 1500, which has more computational resources and greater thermal headroom than a wearable device, can perform computationally intensive tasks for the wearable device, thereby improving performance of an operation performed by the wearable device.

HIPD 1500 includes a multi-touch input surface 1502 on a first side (e.g., a front surface) that is configured to detect one or more user inputs. In particular, multi-touch input surface 1502 can detect single tap inputs, multi-tap inputs, swipe gestures and/or inputs, force-based and/or pressure-based touch inputs, held taps, and the like. Multi-touch input surface 1502 is configured to detect capacitive touch inputs and/or force (and/or pressure) touch inputs. Multi-touch input surface 1502 includes a first touch-input surface 1504 defined by a surface depression and a second touch-input surface 1506 defined by a substantially planar portion. First touch-input surface 1504 can be disposed adjacent to second touch-input surface 1506. In some examples, first touch-input surface 1504 and second touch-input surface 1506 can be different dimensions and/or shapes. For example, first touch-input surface 1504 can be substantially circular and second touch-input surface 1506 can be substantially rectangular. In some examples, the surface depression of multi-touch input surface 1502 is configured to guide user handling of HIPD 1500. In particular, the surface depression can be configured such that the user holds HIPD 1500 upright when held in a single hand (e.g., such that the using imaging devices or cameras 1514A and 1514B are pointed toward a ceiling or the sky). Additionally, the surface depression is configured such that the user's thumb rests within first touch-input surface 1504.

In some examples, the different touch-input surfaces include a plurality of touch-input zones. For example, second touch-input surface 1506 includes at least a second touch-input zone 1508 within a first touch-input zone 1507 and a third touch-input zone 1510 within second touch-input zone 1508. In some examples, one or more of touch-input zones 1508 and 1510 are optional and/or user defined (e.g., a user can specific a touch-input zone based on their preferences). In some examples, each touch-input surface 1504 and 1506 and/or touch-input zone 1508 and 1510 are associated with a predetermined set of commands. For example, a user input detected within first touch-input zone 1508 may cause HIPD 1500 to perform a first command and a user input detected within second touch-input surface 1506 may cause HIPD 1500 to perform a second command, distinct from the first. In some examples, different touch-input surfaces and/or touch-input zones are configured to detect one or more types of user inputs. The different touch-input surfaces and/or touch-input zones can be configured to detect the same or distinct types of user inputs. For example, first touch-input zone 1508 can be configured to detect force touch inputs (e.g., a magnitude at which the user presses down) and capacitive touch inputs, and second touch-input zone 1510 can be configured to detect capacitive touch inputs.

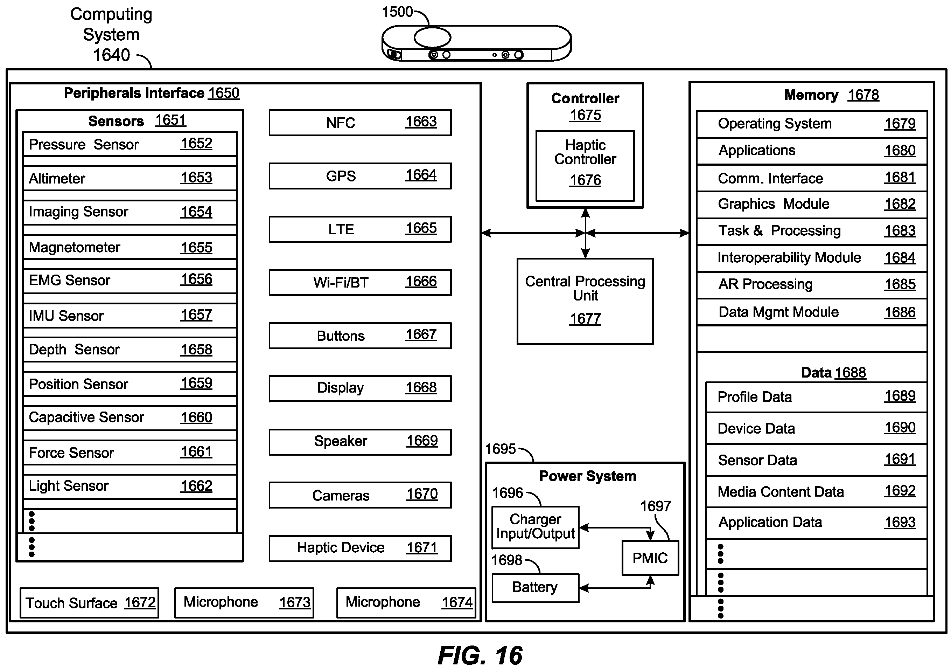

As shown in FIG. 16, HIPD 1500 includes one or more sensors 1651 for sensing data used in the performance of one or more operations and/or functions. For example, HIPD 1500 can include an IMU sensor that is used in conjunction with cameras 1514A, 1514B (FIGS. 15A-15B) for 3-dimensional object manipulation (e.g., enlarging, moving, destroying, etc., an object) in an AR or VR environment. Non-limiting examples of sensors 1651 included in HIPD 1500 include a light sensor, a magnetometer, a depth sensor, a pressure sensor, and a force sensor.

HIPD 1500 can include one or more light indicators 1512 to provide one or more notifications to the user. In some examples, light indicators 1512 are LEDs or other types of illumination devices. Light indicators 1512 can operate as a privacy light to notify the user and/or others near the user that an imaging device and/or microphone are active. In some examples, a light indicator is positioned adjacent to one or more touch-input surfaces. For example, a light indicator can be positioned around first touch-input surface 1504. Light indicators 1512 can be illuminated in different colors and/or patterns to provide the user with one or more notifications and/or information about the device. For example, a light indicator positioned around first touch-input surface 1504 may flash when the user receives a notification (e.g., a message), change red when HIPD 1500 is out of power, operate as a progress bar (e.g., a light ring that is closed when a task is completed (e.g., 0% to 100%)), operate as a volume indicator, etc.

In some examples, HIPD 1500 includes one or more additional sensors on another surface. For example, as shown FIG. 15A, HIPD 1500 includes a set of one or more sensors (e.g., sensor set 1520) on an edge of HIPD 1500. Sensor set 1520, when positioned on an edge of the of HIPD 1500, can be pe positioned at a predetermined tilt angle (e.g., 26 degrees), which allows sensor set 1520 to be angled toward the user when placed on a desk or other flat surface. Alternatively, In some examples, sensor set 1520 is positioned on a surface opposite the multi-touch input surface 1502 (e.g., a back surface). The one or more sensors of sensor set 1520 are discussed in further detail below.

The side view of the of HIPD 1500 in FIG. 15B shows sensor set 1520 and camera 1514B. Sensor set 1520 can include one or more cameras 1522A and 1522B, a depth projector 1524, an ambient light sensor 1528, and a depth receiver 1530. In some examples, sensor set 1520 includes a light indicator 1526. Light indicator 1526 can operate as a privacy indicator to let the user and/or those around them know that a camera and/or microphone is active. Sensor set 1520 is configured to capture a user's facial expression such that the user can puppet a custom avatar (e.g., showing emotions, such as smiles, laughter, etc., on the avatar or a digital representation of the user). Sensor set 1520 can be configured as a side stereo RGB system, a rear indirect Time-of-Flight (iToF) system, or a rear stereo RGB system. As the skilled artisan will appreciate upon reading the descriptions provided herein, HIPD 1500 described herein can use different sensor set 1520 configurations and/or sensor set 1520 placement.

Turning to FIG. 16, In some examples, a computing system 1640 of HIPD 1500 can include one or more haptic devices 1671 (e.g., a vibratory haptic actuator) that are configured to provide haptic feedback (e.g., kinesthetic sensation). Sensors 1651 and/or the haptic devices 1671 can be configured to operate in conjunction with multiple applications and/or communicatively coupled devices including, without limitation, a wearable devices, health monitoring applications, social media applications, game applications, and artificial reality applications (e.g., the applications associated with artificial reality).

In some examples, HIPD 1500 is configured to operate without a display. However, optionally, computing system 1640 of the HIPD 1500 can include a display 1668. HIPD 1500 can also include one or more optional peripheral buttons 1667. For example, peripheral buttons 1667 can be used to turn on or turn off HIPD 1500. Further, HIPD 1500 housing can be formed of polymers and/or elastomers. In other words, HIPD 1500 may be designed such that it would not easily slide off a surface. In some examples, HIPD 1500 includes one or magnets to couple HIPD 1500 to another surface. This allows the user to mount HIPD 1500 to different surfaces and provide the user with greater flexibility in use of HIPD 1500.

As described above, HIPD 1500 can distribute and/or provide instructions for performing the one or more tasks at HIPD 1500 and/or a communicatively coupled device. For example, HIPD 1500 can identify one or more back-end tasks to be performed by HIPD 1500 and one or more front-end tasks to be performed by a communicatively coupled device. While HIPD 1500 is configured to offload and/or handoff tasks of a communicatively coupled device, HIPD 1500 can perform both back-end and front-end tasks (e.g., via one or more processors, such as CPU 1677). HIPD 1500 can, without limitation, can be used to perform augmented calling (e.g., receiving and/or sending 3D or 2.5D live volumetric calls, live digital human representation calls, and/or avatar calls), discreet messaging, 6DoF portrait/landscape gaming, AR/VR object manipulation, AR/VR content display (e.g., presenting content via a virtual display), and/or other AR/VR interactions. HIPD 1500 can perform the above operations alone or in conjunction with a wearable device (or other communicatively coupled electronic device).

FIG. 16 shows a block diagram of a computing system 1640 of HIPD 1500. HIPD 1500, described in detail above, can include one or more components shown in HIPD computing system 1640. HIPD 1500 will be understood to include the components shown and described below for HIPD computing system 1640. In some examples, all, or a substantial portion of the components of HIPD computing system 1640 are included in a single integrated circuit. Alternatively, In some examples, components of HIPD computing system 1640 are included in a plurality of integrated circuits that are communicatively coupled.

HIPD computing system 1640 can include a processor (e.g., a CPU 1677, a GPU, and/or a CPU with integrated graphics), a controller 1675, a peripherals interface 1650 that includes one or more sensors 1651 and other peripheral devices, a power source (e.g., a power system 1695), and memory (e.g., a memory 1678) that includes an operating system (e.g., an operating system 1679), data (e.g., data 1688), one or more applications (e.g., applications 1680), and one or more modules (e.g., a communications interface module 1681, a graphics module 1682, a task and processing management module 1683, an interoperability module 1684, an AR processing module 1685, a data management module 1686, etc.). HIPD computing system 1640 further includes a power system 1695 that includes a charger input and output 1696, a PMIC 1697, and a battery 1698, all of which are defined above.

In some examples, peripherals interface 1650 can include one or more sensors 1651. Sensors 1651 can include analogous sensors to those described above in reference to FIG. 10. For example, sensors 1651 can include imaging sensors 1654, (optional) EMG sensors 1656, IMU sensors 1658, and capacitive sensors 1660. In some examples, sensors 1651 can include one or more pressure sensors 1652 for sensing pressure data, an altimeter 1653 for sensing an altitude of the HIPD 1500, a magnetometer 1655 for sensing a magnetic field, a depth sensor 1657 (or a time-of flight sensor) for determining a difference between the camera and the subject of an image, a position sensor 1659 (e.g., a flexible position sensor) for sensing a relative displacement or position change of a portion of the HIPD 1500, a force sensor 1661 for sensing a force applied to a portion of the HIPD 1500, and a light sensor 1662 (e.g., an ambient light sensor) for detecting an amount of lighting. Sensors 1651 can include one or more sensors not shown in FIG. 16.

Analogous to the peripherals described above in reference to FIG. 10, peripherals interface 1650 can also include an NFC component 1663, a GPS component 1664, an LTE component 1665, a Wi-Fi and/or Bluetooth communication component 1666, a speaker 1669, a haptic device 1671, and a microphone 1673. As noted above, HIPD 1500 can optionally include a display 1668 and/or one or more peripheral buttons 1667. Peripherals interface 1650 can further include one or more cameras 1670, touch surfaces 1672, and/or one or more light emitters 1674. Multi-touch input surface 1502 described above in reference to FIGS. 15A and 15B is an example of touch surface 1672. Light emitters 1674 can be one or more LEDs, lasers, etc. and can be used to project or present information to a user. For example, light emitters 1674 can include light indicators 1512 and 1526 described above in reference to FIGS. 15A and 15B. Cameras 1670 (e.g., cameras 1514A, 1514B, 1522A, and 1522B described above in reference to FIGS. 15A and 15B) can include one or more wide angle cameras, fish-eye cameras, spherical cameras, compound eye cameras (e.g., stereo and multi cameras), depth cameras, RGB cameras, ToF cameras, RGB-D cameras (depth and ToF cameras), and/or other suitable cameras. Cameras 1670 can be used for SLAM, 6DoF ray casting, gaming, object manipulation and/or other rendering, facial recognition and facial expression recognition, etc.

Similar to watch body computing system 1160 and watch band computing system 1130 described above in reference to FIG. 11, HIPD computing system 1640 can include one or more haptic controllers 1676 and associated componentry (e.g., haptic devices 1671) for providing haptic events at HIPD 1500.

Memory 1678 can include high-speed random-access memory and/or non-volatile memory, such as one or more magnetic disk storage devices, flash memory devices, or other non-volatile solid-state memory devices. Access to memory 1678 by other components of HIPD 1500, such as the one or more processors and peripherals interface 1650, can be controlled by a memory controller of controllers 1675.

In some examples, software components stored in memory 1678 include one or more operating systems 1679, one or more applications 1680, one or more communication interface modules 1681, one or more graphics modules 1682, and/or one or more data management modules 1686, which are analogous to the software components described above in reference to FIG. 10.

In some examples, software components stored in memory 1678 include a task and processing management module 1683 for identifying one or more front-end and back-end tasks associated with an operation performed by the user, performing one or more front-end and/or back-end tasks, and/or providing instructions to one or more communicatively coupled devices that cause performance of the one or more front-end and/or back-end tasks. In some examples, task and processing management module 1683 uses data 1688 (e.g., device data 1690) to distribute the one or more front-end and/or back-end tasks based on communicatively coupled devices' computing resources, available power, thermal headroom, ongoing operations, and/or other factors. For example, task and processing management module 1683 can cause the performance of one or more back-end tasks (of an operation performed at communicatively coupled AR system 1200 ) at HIPD 1500 in accordance with a determination that the operation is utilizing a predetermined amount (e.g., at least 70%) of computing resources available at AR system 1200 .

In some examples, software components stored in memory 1678 include an interoperability module 1684 for exchanging and utilizing information received and/or provided to distinct communicatively coupled devices. Interoperability module 1684 allows for different systems, devices, and/or applications to connect and communicate in a coordinated way without user input. In some examples, software components stored in memory 1678 include an AR processing module 1685 that is configured to process signals based at least on sensor data for use in an AR and/or VR environment. For example, AR processing module 1685 can be used for 3D object manipulation, gesture recognition, facial and facial expression recognition, etc.

Memory 1678 can also include data 1688. In some examples, data 1688 can include profile data 1689, device data 1690 (including device data of one or more devices communicatively coupled with HIPD 1500, such as device type, hardware, software, configurations, etc.), sensor data 1691, media content data 1692, and application data 1693.

It should be appreciated that HIPD computing system 1640 is an example of a computing system within HIPD 1500, and that HIPD 1500 can have more or fewer components than shown in HIPD computing system 1640, combine two or more components, and/or have a different configuration and/or arrangement of the components. The various components shown HIPD computing system 1640 are implemented in hardware, software, firmware, or a combination thereof, including one or more signal processing and/or application-specific integrated circuits.

The techniques described above in FIGS. 15A, 15B, and 16 can be used with any device used as a human-machine interface controller. In some examples, an HIPD 1500 can be used in conjunction with one or more wearable device such as a head-wearable device (e.g., AR system 1200 and VR system 1310) and/or a wrist-wearable device 1000 (or components thereof).

In some examples, the artificial reality devices and/or accessory devices disclosed herein may include haptic interfaces with transducers that provide haptic feedback and/or that collect haptic information about a user's interaction with an environment. The artificial-reality systems disclosed herein may include various types of haptic interfaces that detect or convey various types of haptic information, including tactile feedback (e.g., feedback that a user detects via nerves in the skin, which may also be referred to as cutaneous feedback) and/or kinesthetic feedback (e.g., feedback that a user detects via receptors located in muscles, joints, and/or tendons). In some examples, cutaneous feedback may include vibration, force, traction, texture, and/or temperature. Similarly, kinesthetic feedback, may include motion and compliance. Cutaneous and/or kinesthetic feedback may be provided using motors, piezoelectric actuators, fluidic systems, and/or a variety of other types of feedback mechanisms. Furthermore, haptic feedback systems may be implemented independent of other artificial-reality devices, within other artificial-reality devices, and/or in conjunction with other artificial-reality devices.

By providing haptic sensations, audible content, and/or visual content, artificial-reality systems may create an entire virtual experience or enhance a user's real-world experience in a variety of contexts and environments. For instance, artificial-reality systems may assist or extend a user's perception, memory, or cognition within a particular environment. Some systems may enhance a user's interactions with other people in the real world or may enable more immersive interactions with other people in a virtual world. Artificial-reality systems may also be used for educational purposes (e.g., for teaching or training in schools, hospitals, government organizations, military organizations, business enterprises, etc.), entertainment purposes (e.g., for playing video games, listening to music, watching video content, etc.), and/or for accessibility purposes (e.g., as hearing aids, visual aids, etc.). The haptics assemblies disclosed herein may enable or enhance a user's artificial-reality experience in one or more of these contexts and environments and/or in other contexts and environments.

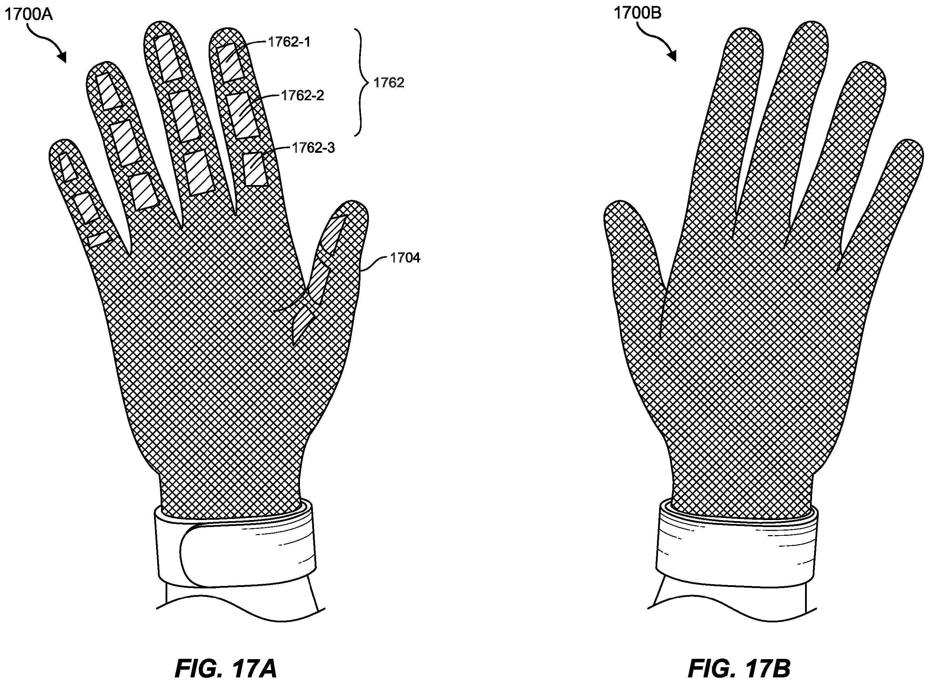

FIGS. 17A and 17B show example haptic feedback systems (e.g., hand-wearable devices) for providing feedback to a user regarding the user's interactions with a computing system (e.g., an artificial-reality environment presented by the AR system 1200 or the VR system 1310). In some examples, a computing system (e.g., the AR systems 800 and/or 900) may also provide feedback to one or more users based on an action that was performed within the computing system and/or an interaction provided by the AR system (e.g., which may be based on instructions that are executed in conjunction with performing operations of an application of the computing system). Such feedback may include visual and/or audio feedback and may also include haptic feedback provided by a haptic assembly, such as one or more haptic assemblies 1762 of haptic device 1700 (e.g., haptic assemblies 1762-1, 1762-2, 1762-3, etc.). For example, the haptic feedback may prevent (or, at a minimum, hinder/resist movement of) one or more fingers of a user from bending past a certain point to simulate the sensation of touching a solid coffee mug. In actuating such haptic effects, haptic device 1700 can change (either directly or indirectly) a pressurized state of one or more of haptic assemblies 1762.

Vibrotactile system 1700 may optionally include other subsystems and components, such as touch-sensitive pads, pressure sensors, motion sensors, position sensors, lighting elements, and/or user interface elements (e.g., an on/off button, a vibration control element, etc.). During use, haptic assemblies 1762 may be configured to be activated for a variety of different reasons, such as in response to the user's interaction with user interface elements, a signal from the motion or position sensors, a signal from the touch-sensitive pads, a signal from the pressure sensors, a signal from the other device or system, etc.

In FIGS. 17A and 17B, each of haptic assemblies 1762 may include a mechanism that, at a minimum, provides resistance when the respective haptic assembly 1762 is transitioned from a first pressurized state (e.g., atmospheric pressure or deflated) to a second pressurized state (e.g., inflated to a threshold pressure). Structures of haptic assemblies 1762 can be integrated into various devices configured to be in contact or proximity to a user's skin, including, but not limited to devices such as glove worn devices, body worn clothing device, headset devices.

As noted above, haptic assemblies 1762 described herein can be configured to transition between a first pressurized state and a second pressurized state to provide haptic feedback to the user. Due to the ever-changing nature of artificial-reality, haptic assemblies 1762 may be required to transition between the two states hundreds, or perhaps thousands of times, during a single use. Thus, haptic assemblies 1762 described herein are durable and designed to quickly transition from state to state. To provide some context, in the first pressurized state, haptic assemblies 1762 do not impede free movement of a portion of the wearer's body. For example, one or more haptic assemblies 1762 incorporated into a glove are made from flexible materials that do not impede free movement of the wearer's hand and fingers (e.g., an electrostatic-zipping actuator). Haptic assemblies 1762 may be configured to conform to a shape of the portion of the wearer's body when in the first pressurized state. However, once in the second pressurized state, haptic assemblies 1762 can be configured to restrict and/or impede free movement of the portion of the wearer's body (e.g., appendages of the user's hand). For example, the respective haptic assembly 1762 (or multiple respective haptic assemblies) can restrict movement of a wearer's finger (e.g., prevent the finger from curling or extending) when haptic assembly 1762 is in the second pressurized state. Moreover, once in the second pressurized state, haptic assemblies 1762 may take different shapes, with some haptic assemblies 1762 configured to take a planar, rigid shape (e.g., flat and rigid), while some other haptic assemblies 1762 are configured to curve or bend, at least partially.

As a non-limiting example, haptic device 1700 includes a plurality of haptic devices (e.g., a pair of haptic gloves, a haptics component of a wrist-wearable device (e.g., any of the wrist-wearable devices described with respect to FIGS. 6-10), etc.), each of which can include a garment component (e.g., a garment 1704) and one or more haptic assemblies coupled (e.g., physically coupled) to the garment component. For example, each of the haptic assemblies 1762-1, 1762-2, 1762-3, . . . 1762-N are physically coupled to the garment 1704 and are configured to contact respective phalanges of a user's thumb and fingers. As explained above, haptic assemblies 1762 are configured to provide haptic simulations to a wearer of device 1700. Garment 1704 of each device 1700 can be one of various articles of clothing (e.g., gloves, socks, shirts, pants, etc.). Thus, a user may wear multiple haptic devices 1700 that are each configured to provide haptic stimulations to respective parts of the body where haptic devices 1700 are being worn.

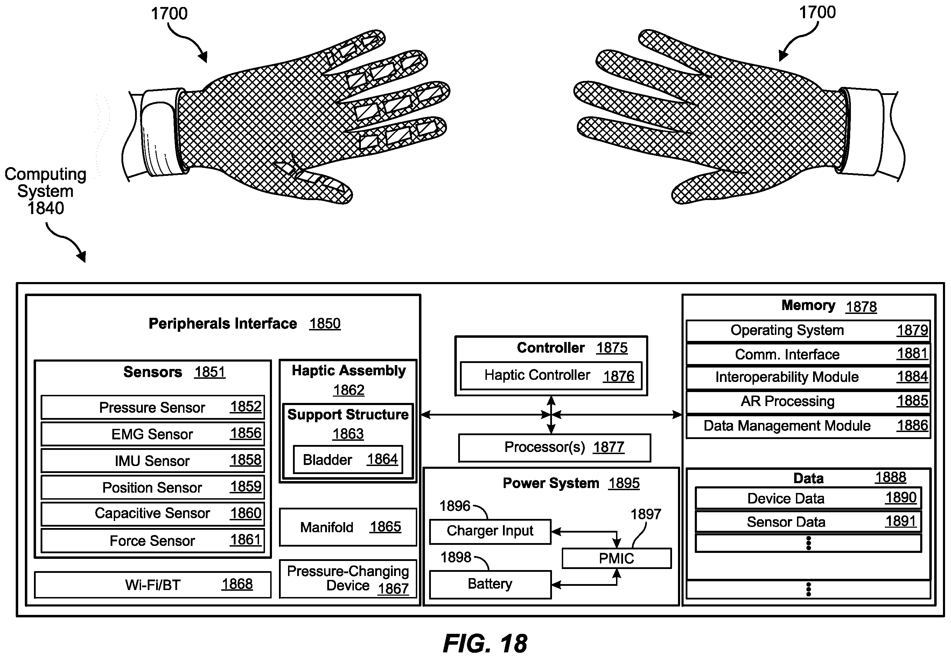

FIG. 18 shows block diagrams of a computing system 1840 of haptic device 1700. Computing system 1840 can include one or more peripherals interfaces 1850, one or more power systems 1895, one or more controllers 1875 (including one or more haptic controllers 1876), one or more processors 1877 (as defined above, including any of the examples provided), and memory 1878, which can all be in electronic communication with each other. For example, one or more processors 1877 can be configured to execute instructions stored in the memory 1878, which can cause a controller of the one or more controllers 1875 to cause operations to be performed at one or more peripheral devices of peripherals interface 1850. In some examples, each operation described can occur based on electrical power provided by the power system 1895. The power system 1895 can include a charger input 1896, a PMIC 1897, and a battery 1898.

In some examples, peripherals interface 1850 can include one or more devices configured to be part of computing system 1840, many of which have been defined above and/or described with respect to wrist-wearable devices shown in FIGS. 10 and 11. For example, peripherals interface 1850 can include one or more sensors 1851. Some example sensors include: one or more pressure sensors 1852, one or more EMG sensors 1856, one or more IMU sensors 1858, one or more position sensors 1859, one or more capacitive sensors 1860, one or more force sensors 1861; and/or any other types of sensors defined above or described with respect to any other examples discussed herein.

In some examples, the peripherals interface can include one or more additional peripheral devices, including one or more Wi-Fi and/or Bluetooth devices 1868; one or more haptic assemblies 1862; one or more support structures 1863 (which can include one or more bladders 1864; one or more manifolds 1865; one or more pressure-changing devices 1867; and/or any other types of peripheral devices defined above or described with respect to any other examples discussed herein.

In some examples, each haptic assembly 1862 includes a support structure 1863 and at least one bladder 1864. Bladder 1864 (e.g., a membrane) may be a sealed, inflatable pocket made from a durable and puncture-resistant material, such as thermoplastic polyurethane (TPU), a flexible polymer, or the like. Bladder 1864 contains a medium (e.g., a fluid such as air, inert gas, or even a liquid) that can be added to or removed from bladder 1864 to change a pressure (e.g., fluid pressure) inside the bladder 1864. Support structure 1863 is made from a material that is stronger and stiffer than the material of bladder 1864. A respective support structure 1863 coupled to a respective bladder 1864 is configured to reinforce the respective bladder 1864 as the respective bladder 1864 changes shape and size due to changes in pressure (e.g., fluid pressure) inside the bladder.

The system 1840 also includes a haptic controller 1876 and a pressure-changing device 1867. In some examples, haptic controller 1876 is part of the computer system 1840 (e.g., in electronic communication with one or more processors 1877 of the computer system 1840). Haptic controller 1876 is configured to control operation of pressure-changing device 1867, and in turn operation of haptic device 1700. For example, haptic controller 1876 sends one or more signals to pressure-changing device 1867 to activate pressure-changing device 1867 (e.g., turn it on and off). The one or more signals may specify a desired pressure (e.g., pounds-per-square inch) to be output by pressure-changing device 1867. Generation of the one or more signals, and in turn the pressure output by pressure-changing device 1867, may be based on information collected by sensors 1851. For example, the one or more signals may cause pressure-changing device 1867 to increase the pressure (e.g., fluid pressure) inside a first haptic assembly 1862 at a first time, based on the information collected by sensors 1851 (e.g., the user makes contact with an artificial coffee mug or other artificial object). Then, the controller may send one or more additional signals to pressure-changing device 1867 that cause pressure-changing device 1867 to further increase the pressure inside first haptic assembly 1862 at a second time after the first time, based on additional information collected by sensors 1851. Further, the one or more signals may cause pressure-changing device 1867 to inflate one or more bladders 1864 in a first device 1700A, while one or more bladders 1864 in a second device 1700B remain unchanged. Additionally, the one or more signals may cause pressure-changing device 1867 to inflate one or more bladders 1864 in a first device 1700A to a first pressure and inflate one or more other bladders 1864 in first device 1700A to a second pressure different from the first pressure. Depending on number of devices 1700 serviced by pressure-changing device 1867, and the number of bladders therein, many different inflation configurations can be achieved through the one or more signals and the examples above are not meant to be limiting.

The system 1840 may include an optional manifold 1865 between pressure-changing device 1867 and haptic devices 1700. Manifold 1865 may include one or more valves (not shown) that pneumatically couple each of haptic assemblies 1862 with pressure-changing device 1867 via tubing. In some examples, manifold 1865 is in communication with controller 1875, and controller 1875 controls the one or more valves of manifold 1865 (e.g., the controller generates one or more control signals). Manifold 1865 is configured to switchably couple pressure-changing device 1867 with one or more haptic assemblies 1862 of the same or different haptic devices 1700 based on one or more control signals from controller 1875. In some examples, instead of using manifold 1865 to pneumatically couple pressure-changing device 1867 with haptic assemblies 1862, system 1840 may include multiple pressure-changing devices 1867, where each pressure-changing device 1867 is pneumatically coupled directly with a single haptic assembly 1862 or multiple haptic assemblies 1862. In some examples, pressure-changing device 1867 and optional manifold 1865 can be configured as part of one or more of the haptic devices 1700 while, in other examples, pressure-changing device 1867 and optional manifold 1865 can be configured as external to haptic device 1700. A single pressure-changing device 1867 may be shared by multiple haptic devices 1700.

In some examples, pressure-changing device 1867 is a pneumatic device, hydraulic device, a pneudraulic device, or some other device capable of adding and removing a medium (e.g., fluid, liquid, gas) from the one or more haptic assemblies 1862.

The devices shown in FIGS. 17A-18 may be coupled via a wired connection (e.g., via busing). Alternatively, one or more of the devices shown in FIGS. 17A-18 may be wirelessly connected (e.g., via short-range communication signals).

Memory 1878 includes instructions and data, some or all of which may be stored as non-transitory computer-readable storage media within memory 1878. For example, memory 1878 can include one or more operating systems 1879; one or more communication interface applications 1881; one or more interoperability modules 1884; one or more AR processing applications 1885; one or more data management modules 1886; and/or any other types of applications or modules defined above or described with respect to any other examples discussed herein.

Memory 1878 also includes data 1888 which can be used in conjunction with one or more of the applications discussed above. Data 1888 can include: device data 1890; sensor data 1891; and/or any other types of data defined above or described with respect to any other examples discussed herein.

In some examples, the augmented reality systems described herein may also include a microphone array with a plurality of acoustic transducers. Acoustic transducers may represent transducers that detect air pressure variations induced by sound waves. Each acoustic transducer may be configured to detect sound and convert the detected sound into an electronic format (e.g., an analog or digital format). A microphone array may include, for example, ten acoustic transducers that may be designed to be placed inside a corresponding ear of the user, acoustic transducers that may be positioned at various locations on an HMD frame a watch band, etc.

In some examples, one or more of acoustic transducers may be used as output transducers (e.g., speakers). For example, the artificial reality systems described herein may include acoustic transducers that are earbuds or any other suitable type of headphone or speaker.

The configuration of acoustic transducers of a microphone array may vary and may include any suitable number of transducers. In some examples, using higher numbers of acoustic transducers may increase the amount of audio information collected and/or the sensitivity and accuracy of the audio information. In contrast, using a lower number of acoustic transducers may decrease the computing power required by an associated controller to process the collected audio information. In addition, the position of each acoustic transducer of the microphone array may vary. For example, the position of an acoustic transducer may include a defined position on the user, a defined coordinate on a frame of an HMD, an orientation associated with each acoustic transducer, or some combination thereof.

Acoustic transducers and may be positioned on different parts of the user's ear, such as behind the pinna, behind the tragus, and/or within the auricle or fossa. Or, there may be additional acoustic transducers on or surrounding the ear in addition to acoustic transducers inside the ear canal. Having an acoustic transducer positioned next to an ear canal of a user may enable the microphone array to collect information on how sounds arrive at the ear canal. By positioning at least two of acoustic transducers on either side of a user's head (e.g., as binaural microphones), an artificial-reality device may simulate binaural hearing and capture a 3D stereo sound field around about a user's head. In some examples, acoustic transducers may be connected to artificial reality systems via a wired connection, and in other examples acoustic transducers may be connected to artificial-reality systems via a wireless connection (e.g., a BLUETOOTH connection).

Acoustic transducers may be positioned on HMDs frames in a variety of different ways, including along the length of the temples, across the bridge, above or below display devices, or some combination thereof. Acoustic transducers may also be oriented such that the microphone array is able to detect sounds in a wide range of directions surrounding the user wearing the augmented-reality system. In some examples, an optimization process may be performed during manufacturing of augmented-reality system to determine relative positioning of each acoustic transducer in the microphone array.

The artificial-reality systems described herein may also include one or more input and/or output audio transducers. Output audio transducers may include voice coil speakers, ribbon speakers, electrostatic speakers, piezoelectric speakers, bone conduction transducers, cartilage conduction transducers, tragus-vibration transducers, and/or any other suitable type or form of audio transducer. Similarly, input audio transducers may include condenser microphones, dynamic microphones, ribbon microphones, and/or any other type or form of input transducer. In some examples, a single transducer may be used for both audio input and audio output.

Some augmented-reality systems may map a user's and/or device's environment using techniques referred to as "simultaneous location and mapping" (SLAM). SLAM mapping and location identifying techniques may involve a variety of hardware and software tools that can create or update a map of an environment while simultaneously keeping track of a user's location within the mapped environment. SLAM may use many different types of sensors to create a map and determine a user's position within the map.

SLAM techniques may, for example, implement optical sensors to determine a user's location. Radios including WiFi, BLUETOOTH, global positioning system (GPS), cellular or other communication devices may be also used to determine a user's location relative to a radio transceiver or group of transceivers (e.g., a WiFi router or group of GPS satellites). Acoustic sensors such as microphone arrays or 2D or 3D sonar sensors may also be used to determine a user's location within an environment. Augmented-reality and virtual-reality devices may incorporate any or all of these types of sensors to perform SLAM operations such as creating and continually updating maps of the user's current environment. In at least some of the examples described herein, SLAM data generated by these sensors may be referred to as "environmental data" and may indicate a user's current environment. This data may be stored in a local or remote data store (e.g., a cloud data store) and may be provided to a user's AR/VR device on demand.

When the user is wearing an augmented-reality headset or virtual-reality headset in a given environment, the user may be interacting with other users or other electronic devices that serve as audio sources. In some cases, it may be desirable to determine where the audio sources are located relative to the user and then present the audio sources to the user as if they were coming from the location of the audio source. The process of determining where the audio sources are located relative to the user may be referred to as "localization," and the process of rendering playback of the audio source signal to appear as if it is coming from a specific direction may be referred to as "spatialization."

Localizing an audio source may be performed in a variety of different ways. In some cases, an augmented-reality or virtual-reality headset may initiate a DOA analysis to determine the location of a sound source. The DOA analysis may include analyzing the intensity, spectra, and/or arrival time of each sound at the artificial-reality device to determine the direction from which the sounds originated. The DOA analysis may include any suitable algorithm for analyzing the surrounding acoustic environment in which the artificial reality device is located.

For example, the DOA analysis may be designed to receive input signals from a microphone and apply digital signal processing algorithms to the input signals to estimate the direction of arrival. These algorithms may include, for example, delay and sum algorithms where the input signal is sampled, and the resulting weighted and delayed versions of the sampled signal are averaged together to determine a direction of arrival. A least mean squared (LMS) algorithm may also be implemented to create an adaptive filter. This adaptive filter may then be used to identify differences in signal intensity, for example, or differences in time of arrival. These differences may then be used to estimate the direction of arrival. In another example, the DOA may be determined by converting the input signals into the frequency domain and selecting specific bins within the time-frequency (TF) domain to process. Each selected TF bin may be processed to determine whether that bin includes a portion of the audio spectrum with a direct-path audio signal. Those bins having a portion of the direct-path signal may then be analyzed to identify the angle at which a microphone array received the direct-path audio signal. The determined angle may then be used to identify the direction of arrival for the received input signal. Other algorithms not listed above may also be used alone or in combination with the above algorithms to determine DOA.

In some examples, different users may perceive the source of a sound as coming from slightly different locations. This may be the result of each user having a unique head-related transfer function (HRTF), which may be dictated by a user's anatomy including ear canal length and the positioning of the ear drum. The artificial-reality device may provide an alignment and orientation guide, which the user may follow to customize the sound signal presented to the user based on their unique HRTF. In some examples, an artificial reality device may implement one or more microphones to listen to sounds within the user's environment. The augmented reality or virtual reality headset may use a variety of different array transfer functions (e.g., any of the DOA algorithms identified above) to estimate the direction of arrival for the sounds. Once the direction of arrival has been determined, the artificial-reality device may play back sounds to the user according to the user's unique HRTF. Accordingly, the DOA estimation generated using the array transfer function (ATF) may be used to determine the direction from which the sounds are to be played from. The playback sounds may be further refined based on how that specific user hears sounds according to the HRTF.

In addition to or as an alternative to performing a DOA estimation, an artificial-reality device may perform localization based on information received from other types of sensors. These sensors may include cameras, IR sensors, heat sensors, motion sensors, GPS receivers, or in some cases, sensors that detect a user's eye movements. For example, as noted above, an artificial-reality device may include an eye tracker or gaze detector that determines where the user is looking. Often, the user's eyes will look at the source of the sound, if only briefly. Such clues provided by the user's eyes may further aid in determining the location of a sound source. Other sensors such as cameras, heat sensors, and IR sensors may also indicate the location of a user, the location of an electronic device, or the location of another sound source. Any or all of the above methods may be used individually or in combination to determine the location of a sound source and may further be used to update the location of a sound source over time.

Some examples may implement the determined DOA to generate a more customized output audio signal for the user. For instance, an "acoustic transfer function" may characterize or define how a sound is received from a given location. More specifically, an acoustic transfer function may define the relationship between parameters of a sound at its source location and the parameters by which the sound signal is detected (e.g., detected by a microphone array or detected by a user's ear). An artificial-reality device may include one or more acoustic sensors that detect sounds within range of the device. A controller of the artificial-reality device may estimate a DOA for the detected sounds (using, e.g., any of the methods identified above) and, based on the parameters of the detected sounds, may generate an acoustic transfer function that is specific to the location of the device. This customized acoustic transfer function may thus be used to generate a spatialized output audio signal where the sound is perceived as coming from a specific location.

Indeed, once the location of the sound source or sources is known, the artificial-reality device may re-render (i.e., spatialize) the sound signals to sound as if coming from the direction of that sound source. The artificial-reality device may apply filters or other digital signal processing that alter the intensity, spectra, or arrival time of the sound signal. The digital signal processing may be applied in such a way that the sound signal is perceived as originating from the determined location. The artificial-reality device may amplify or subdue certain frequencies or change the time that the signal arrives at each ear. In some cases, the artificial-reality device may create an acoustic transfer function that is specific to the location of the device and the detected direction of arrival of the sound signal. In some examples, the artificial-reality device may re-render the source signal in a stereo device or multi-speaker device (e.g., a surround sound device). In such cases, separate and distinct audio signals may be sent to each speaker. Each of these audio signals may be altered according to the user's HRTF and according to measurements of the user's location and the location of the sound source to sound as if they are coming from the determined location of the sound source. Accordingly, in this manner, the artificial-reality device (or speakers associated with the device) may re-render an audio signal to sound as if originating from a specific location.

In some examples, the systems described herein may also include an eye-tracking subsystem designed to identify and track various characteristics of a user's eye(s), such as the user's gaze direction. The phrase "eye tracking" may, in some examples, refer to a process by which the position, orientation, and/or motion of an eye is measured, detected, sensed, determined, and/or monitored. The disclosed systems may measure the position, orientation, and/or motion of an eye in a variety of different ways, including through the use of various optical-based eye-tracking techniques, ultrasound-based eye-tracking techniques, etc. An eye-tracking subsystem may be configured in a number of different ways and may include a variety of different eye-tracking hardware components or other computer-vision components. For example, an eye-tracking subsystem may include a variety of different optical sensors, such as two-dimensional (2D) or 3D cameras, time-of-flight depth sensors, single-beam or sweeping laser rangefinders, 3D LiDAR sensors, and/or any other suitable type or form of optical sensor. In this example, a processing subsystem may process data from one or more of these sensors to measure, detect, determine, and/or otherwise monitor the position, orientation, and/or motion of the user's eye(s).

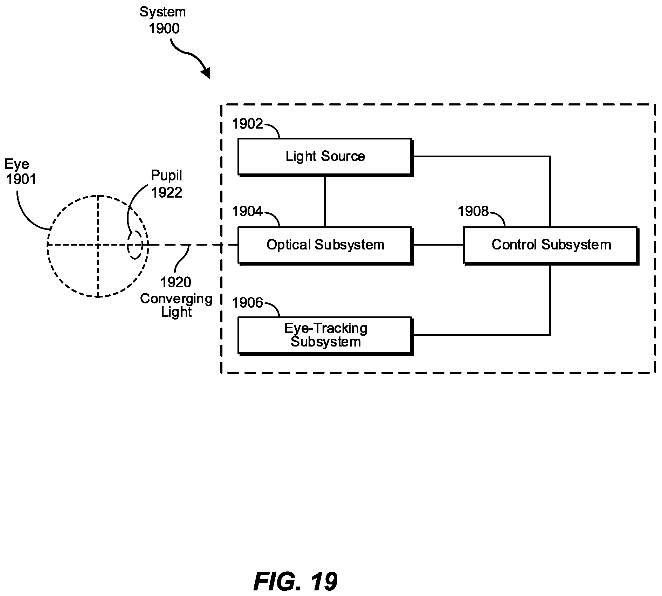

FIG. 19 is an illustration of an example system 1900 that incorporates an eye-tracking subsystem capable of tracking a user's eye(s). As depicted in FIG. 19, system 1900 may include a light source 1902, an optical subsystem 1904, an eye-tracking subsystem 1906, and/or a control subsystem 1908. In some examples, light source 1902 may generate light for an image (e.g., to be presented to an eye 1901 of the viewer). Light source 1902 may represent any of a variety of suitable devices. For example, light source 1902 can include a two-dimensional projector (e.g., a LCoS display), a scanning source (e.g., a scanning laser), or other device (e.g., an LCD, an LED display, an OLED display, an active-matrix OLED display (AMOLED), a transparent OLED display (TOLED), a waveguide, or some other display capable of generating light for presenting an image to the viewer). In some examples, the image may represent a virtual image, which may refer to an optical image formed from the apparent divergence of light rays from a point in space, as opposed to an image formed from the light ray's actual divergence.

In some examples, optical subsystem 1904 may receive the light generated by light source 1902 and generate, based on the received light, converging light 1920 that includes the image. In some examples, optical subsystem 1904 may include any number of lenses (e.g., Fresnel lenses, convex lenses, concave lenses), apertures, filters, mirrors, prisms, and/or other optical components, possibly in combination with actuators and/or other devices. In particular, the actuators and/or other devices may translate and/or rotate one or more of the optical components to alter one or more aspects of converging light 1920. Further, various mechanical couplings may serve to maintain the relative spacing and/or the orientation of the optical components in any suitable combination.

In one example, eye-tracking subsystem 1906 may generate tracking information indicating a gaze angle of an eye 1901 of the viewer. In this example, control subsystem 1908 may control aspects of optical subsystem 1904 (e.g., the angle of incidence of converging light 1920) based at least in part on this tracking information. Additionally, in some examples, control subsystem 1908 may store and utilize historical tracking information (e.g., a history of the tracking information over a given duration, such as the previous second or fraction thereof) to anticipate the gaze angle of eye 1901 (e.g., an angle between the visual axis and the anatomical axis of eye 1901). In some examples, eye-tracking subsystem 1906 may detect radiation emanating from some portion of eye 1901 (e.g., the cornea, the iris, the pupil, or the like) to determine the current gaze angle of eye 1901. In other examples, eye-tracking subsystem 1906 may employ a wavefront sensor to track the current location of the pupil.

Any number of techniques can be used to track eye 1901. Some techniques may involve illuminating eye 1901 with infrared light and measuring reflections with at least one optical sensor that is tuned to be sensitive to the infrared light. Information about how the infrared light is reflected from eye 1901 may be analyzed to determine the position(s), orientation(s), and/or motion(s) of one or more eye feature(s), such as the cornea, pupil, iris, and/or retinal blood vessels.

In some examples, the radiation captured by a sensor of eye-tracking subsystem 1906 may be digitized (i.e., converted to an electronic signal). Further, the sensor may transmit a digital representation of this electronic signal to one or more processors (for example, processors associated with a device including eye-tracking subsystem 1906). Eye-tracking subsystem 1906 may include any of a variety of sensors in a variety of different configurations. For example, eye-tracking subsystem 1906 may include an infrared detector that reacts to infrared radiation. The infrared detector may be a thermal detector, a photonic detector, and/or any other suitable type of detector. Thermal detectors may include detectors that react to thermal effects of the incident infrared radiation.

In some examples, one or more processors may process the digital representation generated by the sensor(s) of eye-tracking subsystem 1906 to track the movement of eye 1901. In another example, these processors may track the movements of eye 1901 by executing algorithms represented by computer-executable instructions stored on non-transitory memory. In some examples, on-chip logic (e.g., an application-specific integrated circuit or ASIC) may be used to perform at least portions of such algorithms. As noted, eye-tracking subsystem 1906 may be programmed to use an output of the sensor(s) to track movement of eye 1901. In some examples, eye-tracking subsystem 1906 may analyze the digital representation generated by the sensors to extract eye rotation information from changes in reflections. In one example, eye-tracking subsystem 1906 may use corneal reflections or glints (also known as Purkinje images) and/or the center of the eye's pupil 1922 as features to track over time.

In some examples, eye-tracking subsystem 1906 may use the center of the eye's pupil 1922 and infrared or near-infrared, non-collimated light to create corneal reflections. In these examples, eye-tracking subsystem 1906 may use the vector between the center of the eye's pupil 1922 and the corneal reflections to compute the gaze direction of eye 1901. In some examples, the disclosed systems may perform a calibration procedure for an individual (using, e.g., supervised or unsupervised techniques) before tracking the user's eyes. For example, the calibration procedure may include directing users to look at one or more points displayed on a display while the eye-tracking system records the values that correspond to each gaze position associated with each point.

In some examples, eye-tracking subsystem 1906 may use two types of infrared and/or near-infrared (also known as active light) eye-tracking techniques: bright-pupil and dark-pupil eye tracking, which may be differentiated based on the location of an illumination source with respect to the optical elements used. If the illumination is coaxial with the optical path, then eye 1901 may act as a retroreflector as the light reflects off the retina, thereby creating a bright pupil effect similar to a red-eye effect in photography. If the illumination source is offset from the optical path, then the eye's pupil 1922 may appear dark because the retroreflection from the retina is directed away from the sensor. In some examples, bright-pupil tracking may create greater iris/pupil contrast, allowing more robust eye tracking with iris pigmentation, and may feature reduced interference (e.g., interference caused by eyelashes and other obscuring features). Bright-pupil tracking may also allow tracking in lighting conditions ranging from total darkness to a very bright environment.

In some examples, control subsystem 1908 may control light source 1902 and/or optical subsystem 1904 to reduce optical aberrations (e.g., chromatic aberrations and/or monochromatic aberrations) of the image that may be caused by or influenced by eye 1901. In some examples, as mentioned above, control subsystem 1908 may use the tracking information from eye-tracking subsystem 1906 to perform such control. For example, in controlling light source 1902, control subsystem 1908 may alter the light generated by light source 1902 (e.g., by way of image rendering) to modify (e.g., pre-distort) the image so that the aberration of the image caused by eye 1901 is reduced.

The disclosed systems may track both the position and relative size of the pupil (since, e.g., the pupil dilates and/or contracts). In some examples, the eye-tracking devices and components (e.g., sensors and/or sources) used for detecting and/or tracking the pupil may be different (or calibrated differently) for different types of eyes. For example, the frequency range of the sensors may be different (or separately calibrated) for eyes of different colors and/or different pupil types, sizes, and/or the like. As such, the various eye-tracking components (e.g., infrared sources and/or sensors) described herein may need to be calibrated for each individual user and/or eye.

The disclosed systems may track both eyes with and without ophthalmic correction, such as that provided by contact lenses worn by the user. In some examples, ophthalmic correction elements (e.g., adjustable lenses) may be directly incorporated into the artificial reality systems described herein. In some examples, the color of the user's eye may necessitate modification of a corresponding eye-tracking algorithm. For example, eye-tracking algorithms may need to be modified based at least in part on the differing color contrast between a brown eye and, for example, a blue eye.

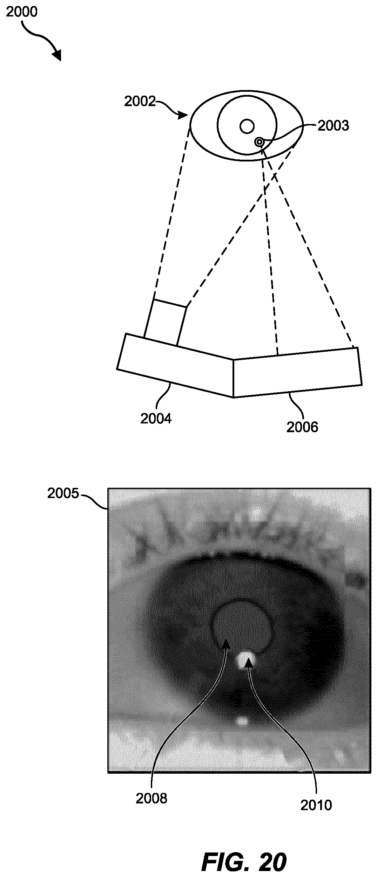

FIG. 20 is a more detailed illustration of various aspects of the eye-tracking subsystem illustrated in FIG. 19. As shown in this figure, an eye-tracking subsystem 2000 may include at least one source 2004 and at least one sensor 2006. Source 2004 generally represents any type or form of element capable of emitting radiation. In one example, source 2004 may generate visible, infrared, and/or near-infrared radiation. In some examples, source 2004 may radiate non-collimated infrared and/or near-infrared portions of the electromagnetic spectrum towards an eye 2002 of a user. Source 2004 may utilize a variety of sampling rates and speeds. For example, the disclosed systems may use sources with higher sampling rates in order to capture fixational eye movements of a user's eye 2002 and/or to correctly measure saccade dynamics of the user's eye 2002. As noted above, any type or form of eye-tracking technique may be used to track the user's eye 2002, including optical-based eye-tracking techniques, ultrasound-based eye-tracking techniques, etc.

Sensor 2006 generally represents any type or form of element capable of detecting radiation, such as radiation reflected off the user's eye 2002. Examples of sensor 2006 include, without limitation, a charge coupled device (CCD), a photodiode array, a complementary metal-oxide-semiconductor (CMOS) based sensor device, and/or the like. In one example, sensor 2006 may represent a sensor having predetermined parameters, including, but not limited to, a dynamic resolution range, linearity, and/or other characteristic selected and/or designed specifically for eye tracking.

As detailed above, eye-tracking subsystem 2000 may generate one or more glints. As detailed above, a glint 2003 may represent reflections of radiation (e.g., infrared radiation from an infrared source, such as source 2004) from the structure of the user's eye. In various examples, glint 2003 and/or the user's pupil may be tracked using an eye-tracking algorithm executed by a processor (either within or external to an artificial reality device). For example, an artificial reality device may include a processor and/or a memory device in order to perform eye tracking locally and/or a transceiver to send and receive the data necessary to perform eye tracking on an external device (e.g., a mobile phone, cloud server, or other computing device).

FIG. 20 shows an example image 2005 captured by an eye-tracking subsystem, such as eye-tracking subsystem 2000. In this example, image 2005 may include both the user's pupil 2008 and a glint 2010 near the same. In some examples, pupil 2008 and/or glint 2010 may be identified using an artificial-intelligence-based algorithm, such as a computer-vision-based algorithm. In one example, image 2005 may represent a single frame in a series of frames that may be analyzed continuously in order to track the eye 2002 of the user. Further, pupil 2008 and/or glint 2010 may be tracked over a period of time to determine a user's gaze.

In one example, eye-tracking subsystem 2000 may be configured to identify and measure the inter-pupillary distance (IPD) of a user. In some examples, eye-tracking subsystem 2000 may measure and/or calculate the IPD of the user while the user is wearing the artificial reality system. In these examples, eye-tracking subsystem 2000 may detect the positions of a user's eyes and may use this information to calculate the user's IPD.

As noted, the eye-tracking systems or subsystems disclosed herein may track a user's eye position and/or eye movement in a variety of ways. In one example, one or more light sources and/or optical sensors may capture an image of the user's eyes. The eye-tracking subsystem may then use the captured information to determine the user's inter-pupillary distance, interocular distance, and/or a 3D position of each eye (e.g., for distortion adjustment purposes), including a magnitude of torsion and rotation (i.e., roll, pitch, and yaw) and/or gaze directions for each eye. In one example, infrared light may be emitted by the eye-tracking subsystem and reflected from each eye. The reflected light may be received or detected by an optical sensor and analyzed to extract eye rotation data from changes in the infrared light reflected by each eye.

The eye-tracking subsystem may use any of a variety of different methods to track the eyes of a user. For example, a light source (e.g., infrared light-emitting diodes) may emit a dot pattern onto each eye of the user. The eye-tracking subsystem may then detect (e.g., via an optical sensor coupled to the artificial reality system) and analyze a reflection of the dot pattern from each eye of the user to identify a location of each pupil of the user. Accordingly, the eye-tracking subsystem may track up to six degrees of freedom of each eye (i.e., 3D position, roll, pitch, and yaw) and at least a subset of the tracked quantities may be combined from two eyes of a user to estimate a gaze point (i.e., a 3D location or position in a virtual scene where the user is looking) and/or an IPD.

In some cases, the distance between a user's pupil and a display may change as the user's eye moves to look in different directions. The varying distance between a pupil and a display as viewing direction changes may be referred to as "pupil swim" and may contribute to distortion perceived by the user as a result of light focusing in different locations as the distance between the pupil and the display changes. Accordingly, measuring distortion at different eye positions and pupil distances relative to displays and generating distortion corrections for different positions and distances may allow mitigation of distortion caused by pupil swim by tracking the 3D position of a user's eyes and applying a distortion correction corresponding to the 3D position of each of the user's eyes at a given point in time. Thus, knowing the 3D position of each of a user's eyes may allow for the mitigation of distortion caused by changes in the distance between the pupil of the eye and the display by applying a distortion correction for each 3D eye position. Furthermore, as noted above, knowing the position of each of the user's eyes may also enable the eye-tracking subsystem to make automated adjustments for a user's IPD.

In some examples, a display subsystem may include a variety of additional subsystems that may work in conjunction with the eye-tracking subsystems described herein. For example, a display subsystem may include a varifocal subsystem, a scene-rendering module, and/or a vergence-processing module. The varifocal subsystem may cause left and right display elements to vary the focal distance of the display device. In one example, the varifocal subsystem may physically change the distance between a display and the optics through which it is viewed by moving the display, the optics, or both. Additionally, moving or translating two lenses relative to each other may also be used to change the focal distance of the display. Thus, the varifocal subsystem may include actuators or motors that move displays and/or optics to change the distance between them. This varifocal subsystem may be separate from or integrated into the display subsystem. The varifocal subsystem may also be integrated into or separate from its actuation subsystem and/or the eye-tracking subsystems described herein.

In one example, the display subsystem may include a vergence-processing module configured to determine a vergence depth of a user's gaze based on a gaze point and/or an estimated intersection of the gaze lines determined by the eye-tracking subsystem. Vergence may refer to the simultaneous movement or rotation of both eyes in opposite directions to maintain single binocular vision, which may be naturally and automatically performed by the human eye. Thus, a location where a user's eyes are verged is where the user is looking and is also typically the location where the user's eyes are focused. For example, the vergence-processing module may triangulate gaze lines to estimate a distance or depth from the user associated with intersection of the gaze lines. The depth associated with intersection of the gaze lines may then be used as an approximation for the accommodation distance, which may identify a distance from the user where the user's eyes are directed. Thus, the vergence distance may allow for the determination of a location where the user's eyes should be focused and a depth from the user's eyes at which the eyes are focused, thereby providing information (such as an object or plane of focus) for rendering adjustments to the virtual scene.

The vergence-processing module may coordinate with the eye-tracking subsystems described herein to make adjustments to the display subsystem to account for a user's vergence depth. When the user is focused on something at a distance, the user's pupils may be slightly farther apart than when the user is focused on something close. The eye-tracking subsystem may obtain information about the user's vergence or focus depth and may adjust the display subsystem to be closer together when the user's eyes focus or verge on something close and to be farther apart when the user's eyes focus or verge on something at a distance.

The eye-tracking information generated by the above-described eye-tracking subsystems may also be used, for example, to modify various aspect of how different computer-generated images are presented. For example, a display subsystem may be configured to modify, based on information generated by an eye-tracking subsystem, at least one aspect of how the computer-generated images are presented. For instance, the computer-generated images may be modified based on the user's eye movement, such that if a user is looking up, the computer-generated images may be moved upward on the screen. Similarly, if the user is looking to the side or down, the computer-generated images may be moved to the side or downward on the screen. If the user's eyes are closed, the computer-generated images may be paused or removed from the display and resumed once the user's eyes are back open.

The above-described eye-tracking subsystems can be incorporated into one or more of the various artificial reality systems described herein in a variety of ways. For example, one or more of the various components of system 1900 and/or eye-tracking subsystem 2000 may be incorporated into any of the augmented-reality systems in and/or virtual-reality systems described herein in to enable these systems to perform various eye-tracking tasks (including one or more of the eye-tracking operations described herein).

In some examples, the various methods and systems described herein may be performed wholly or in part by a hardware processor executing software instructions stored in a memory. Such operations may be performed within a server or other cloud-accessible device, a desktop or laptop computer, a tablet computer, a smartphone, etc.

The process parameters and sequence of the steps described and/or illustrated herein are given by way of example only and can be varied as desired. For example, while the steps illustrated and/or described herein may be shown or discussed in a particular order, these steps do not necessarily need to be performed in the order illustrated or discussed. The various exemplary methods described and/or illustrated herein may also omit one or more of the steps described or illustrated herein or include additional steps in addition to those disclosed.

The preceding description has been provided to enable others skilled in the art to best utilize various aspects of the examples disclosed herein. This exemplary description is not intended to be exhaustive or to be limited to any precise form disclosed. Many modifications and variations are possible without departing from the scope of the present disclosure. The examples disclosed herein should be considered in all respects illustrative and not restrictive. Reference should be made to any claims appended hereto and their equivalents in determining the scope of the present disclosure.

Unless otherwise noted, the terms "connected to" and "coupled to" (and their derivatives), as used in the specification and/or claims, are to be construed as permitting both direct and indirect (i.e., via other elements or components) connection. In addition, the terms "a" or "an," as used in the specification and/or claims, are to be construed as meaning "at least one of." Finally, for ease of use, the terms "including" and "having" (and their derivatives), as used in the specification and/or claims, are interchangeable with and have the same meaning as the word "comprising."

## Claims

1. A computer-implemented method, comprising:
predicting a user state, wherein the user state is measurable via a plurality of different sensor sampling modes;
determining a level of uncertainty associated with the predicted user state; and
selecting, from the plurality of different sensor sampling modes, a sampling mode to measure the user state, wherein selecting the sampling mode comprises:
selecting a first sampling mode in response to determining that the level of uncertainty is at or above a threshold; or
selecting a second sampling mode in response to determining that the level of uncertainty is below the threshold.

2. The computer-implemented method of claim 1, wherein the user state comprises at least one of:
a user behavior;
a user biometric; and/or
an environmental state relating to a user.

3. The computer-implemented method of claim 2, wherein the user behavior comprises a user ocular behavior.

4. The computer-implemented method of claim 3, wherein the user ocular behavior comprises movement of at least one of a user pupil position or a user gaze.

5. The computer-implemented method of claim 3 or 4, wherein:
the first sampling mode comprises sampling the user ocular behavior using a first type of sensor; and
the second sampling mode comprises sampling the user ocular behavior using a second type of sensor.

6. The computer-implemented method of claim 5, wherein:
the first type of sensor is different to the second type of sensor; and
at least one of the first type of sensor or the second type of sensor comprises at least one of:
an ultrasound detector;
a camera;
a self-mixing interferometry sensor; and/or
a scanning-based eye-tracking sensor;
preferably wherein the camera comprises at least one of:
a waveguide-based camera;
an infrared camera;
a near-infrared camera;
a video-based eye tracking camera; and/or
a stereo camera.

7. The computer-implemented method of any of claims 3 to 6, wherein:
the first sampling mode comprises capturing image data at a high-frame rate that is high relative to a low-frame rate; and
the second sampling mode comprises capturing image data at the low-frame rate.

8. The computer-implemented method of any preceding claim, wherein the first sampling mode is associated with a power consumption requirement that is high relative to a power consumption requirement associated with the second sampling mode.

9. The computer-implemented method of any preceding claim, wherein:
the first sampling mode comprises the use of at least one always-on sensor; and
the second sampling mode comprises the use of at least one on-demand sensor.

10. The computer-implemented method of any preceding claim, wherein at least one of the predicting the user state and the determining the level of uncertainty comprises using a model that is pretrained based on past user behaviors and sensor measurements.

11. The computer-implemented method of any preceding claim, wherein the predicting the user state comprises determining a physical location of the user;
preferably wherein the predicting the user state further comprises:
determining that information related to the physical location is not currently stored in a reference database for the user; and
obtaining additional information about the physical location from at least one external database;
further preferably wherein the determining the physical location of the user comprises determining the physical location of the user using geolocation.

12. The computer-implemented method of any preceding claim, wherein the predicting, the determining, and the selecting steps are each performed by at least one computation location of plurality of locations, the plurality of computation locations comprising:
a headset;
a user computing device; and/or
a cloud-based network;
preferably further comprising selecting, from the plurality of computation locations, a primary computation location for performing each of the predicting, the determining, and the selecting steps.

13. A system, comprising:
a mode-selection subsystem configured to select sampling modes to measure user states, wherein the user states are each measurable via a plurality of different sensor sampling modes;
a headset comprising a plurality of sensors;
at least one physical processor; and
physical memory comprising computer-executable instructions that, when executed by the physical processor, cause the physical processor to carry out the method of any preceding claim.

14. A computer-readable medium comprising one or more computer-executable instructions that, when executed by at least one processor of a computing device, cause the computing device to carry out the method of any of claims 1 to 12.

15. A computer program product comprising instructions which, when executed by at least one processor of a computing device, cause the computing device to carry out the method of any of claims 1 to 12.
